# EUROPEAN PATENT APPLICATION

(11) **EP 4 610 832 A1**
(43) Date of publication of application: **03.09.2025**
(21) Application number: 25152712.3
(22) Date of filing: 20.01.2025
(51) Int. Cl.: G06F 11/30, G06F 11/34

(54) **EXTENDING DYNAMIC RESOURCE CONTROLLER FOR SUB-NUMA CLUSTERING MODE**

(30) Priority: 28.02.2024 WO PCT/CN2024/079022; 28.06.2024 US 202418759515
(71) Applicant: INTEL Corporation, Santa Clara, CA 95054 (US)
(72) Inventor: Tabish, Rohan, Schaumburg, IL, 60193 (US); Herdrich, Andrew J., Hillsboro OR, 97123 (US); Cui, Long, Shanghai, 2004444 (CN); Das, Ripan, Portland OR, 97021 (US); Jagarlapudi, Soma Sankara Ravi Teja, Fort Collins CO (US); Venugopal, Shruthi, Austin TX, 78746 (US); DREWEK-OSSOWICKA, Anna, 80-257 Gdansk pomorskie (PL)
(74) Representative: Samson & Partner Patentanwälte mbB

(57) **Abstract**

Examples include an apparatus having a plurality of clusters of processor cores; a plurality of memory bandwidth allocators, at least one of the plurality of memory bandwidth allocators per cluster, to apply memory bandwidth settings to one or more processor cores of an associated cluster to dynamically adjust priorities of memory bandwidth allocated for one or more workloads to be processed by the one or more processor cores of the associated cluster; a plurality of memory controllers, at least one of the plurality of memory controllers per cluster of processor cores; a plurality of performance monitors, at least one of the plurality of performance monitors per cluster, to generate performance monitoring statistics by monitoring performance of the one or more workloads by one or more processor cores based at least in part on performance monitoring configuration parameters; and a hardware dynamic resource controller configurable into a plurality of virtual dynamic resource controllers, wherein one virtual dynamic resource controller per cluster is to set the performance monitoring configuration parameters based at least in part on memory class of service parameters, and to set memory bandwidth settings per cluster based at least in part on the performance monitoring statistics.

## Description

### BACKGROUND

In modern processor design, a multi-core processor architecture has shared resources such as memory bandwidth, interconnect bandwidth including last-level cache (LLC), processing threads, input/output (I/O) devices, etc. Application performance can become highly unpredictable due to access contention of the shared resources from "noisy neighbor" applications.

Some processors include a technology called Resource Director Technology (RDT), commercially available from Intel Corporation, which enables levels of visibility/control over how shared system resources such as LLC and memory bandwidth are being used by different applications executing on the processor. Low priority applications can be prevented from accessing shared resources if they exceed a quota which is monitored by the RDT technology.

Enabling RDT in a cloud service provider (CSP) computing environment may involve complicated implementations in software (SW), including resource monitor/control interface integration and software dynamic control logic/strategy implementation, which may slow down the adoption of this feature in a production data center environment. Further, different CSPs have implemented different software frameworks, and each CSP may need to develop their own software to enable RDT. In some cases, CSPs having incompatible kernel versions may prevent adoption of RDT.

### BRIEF DESCRIPTION OF DRAWINGS

Various examples in accordance with the present disclosure will be described with reference to the drawings, in which:
FIG. 1 illustrates an example computing system according to some embodiments.
FIG. 2 illustrates an example of dynamic control of memory bandwidth allocation according to some embodiments.
FIG. 3 is a flow diagram illustrating example dynamic control of memory bandwidth allocation processing according to some embodiments.
FIG. 4 is a flow diagram illustrating delay balancer processing according to some embodiments.
FIG. 5A illustrates a sub-NUMA clustering mode architecture with two integrated memory controllers per cluster.
FIG. 5B illustrates experimental results for a sub-NUMA clustering mode architecture with two integrated memory controllers per cluster.
FIG. 5C illustrates experimental results for a sub-NUMA clustering mode architecture with two integrated memory controllers per cluster.
FIG. 5D illustrates an existing implementation of a hardware dynamic resource controller with common telemetry aggregation from all compute dies and uniform control.
FIG. 6A, 6B, 6C, and 6D illustrate sub-NUMA clustering mode architectures with multiple virtual dynamic resources controllers according to embodiments.
FIG. 6E illustrates an integrated dynamic resource controller architecture according to embodiments.
FIG. 6F illustrates a sub-NUMA clustering mode configuration according to embodiments.
FIG. 7 illustrates an example computing system.
FIG. 8 illustrates a block diagram of an example processor and/or System on a Chip (SoC) that may have one or more cores and an integrated memory controller.
FIG. 9A is a block diagram illustrating both an example in-order pipeline and an example register renaming, out-of-order issue/execution pipeline according to examples.
FIG. 9B is a block diagram illustrating both an example in-order architecture core and an example register renaming, out-of-order issue/execution architecture core to be included in a processor according to examples.
FIG. 10 illustrates examples of execution unit(s) circuitry.
FIG. 11 is a block diagram illustrating the use of a software instruction converter to convert binary instructions in a source instruction set architecture to binary instructions in a target instruction set architecture according to examples.

### DETAILED DESCRIPTION

The present disclosure relates to methods, apparatus, systems, and non-transitory computer-readable storage media for extending dynamic resource control for sub-NUMA (non-uniform memory access) clustering mode.

Embodiments may include a software framework-independent dynamic resource controller approach to detecting contention in a memory pipeline from noisy workloads based on memory controller (MC) performance counters. Embodiments may include throttling (e.g., delay) low priority memory requests of noisy workloads to protect memory bandwidth needed to ensure quality of service (QoS) requirements of a high priority workload. In some embodiments, this approach is implemented in the firmware of a performance monitoring unit (P-unit) of a multi-core processor. In experimental scenarios, the computing system provides approximately 90% to approximately 97% performance levels even in the presence of a noisy neighbor application.

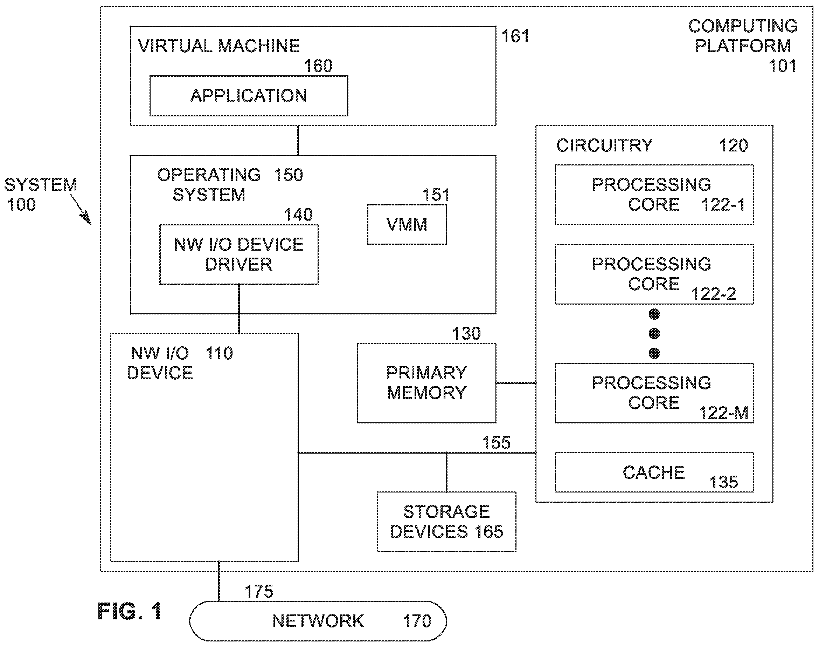

Figure 1 illustrates an example computing system 100. As shown in Figure 1, computing system 100 includes a computing platform 101 coupled to a network 170 (which may be the Internet, for example). In some examples, as shown in Figure 1, computing platform 101 is coupled to network 170 via network communication channel 175 and through at least one network (NW) input/output (I/O) device 110. In an embodiment, network I/O device 110 comprises a switch and a network interface controller (NIC) having one or more destination ports (not shown) connected or coupled to network communication channel 175. In an embodiment, network communication channel 175 includes a physical (PHY) device (not shown). In an embodiment, network I/O device 110 includes an Ethernet NIC. Network I/O device 110 transmits data packets from computing platform 101 over network 170 to other destinations and receives data packets from other destinations for forwarding to computing platform 101.

According to some examples, computing platform 101, as shown in Figure 1, includes circuitry 120, primary memory 130, operating system (OS) 150, NW I/O device driver 140, virtual machine manager (VMM) (also known as a hypervisor) 151, at least one application 160 running in a virtual machine (VM) 161, and one or more storage devices 165. In one embodiment, OS 150 is Linux^{™}. In another embodiment, OS 150 is Windows^{®} Server. Other OSs may also be used. Network I/O device driver 140 operates to initialize and manage I/O requests performed by network I/O device 110. In an embodiment, packets and/or packet metadata transmitted to network I/O device 110 and/or received from network I/O device 110 are stored in one or more of primary memory 130 and/or storage devices 165. In one embodiment, application 160 is a packet processing application operating in user mode.

In at least one embodiment, storage devices 165 may be one or more of hard disk drives (HDDs) and/or solid-state drives (SSDs). In an embodiment, storage devices 165 may be non-volatile memories (NVMs). In some examples, as shown in Figure 1, circuitry 120 may communicatively couple to network I/O device 110 via communications link 155. In one embodiment, communications link 155 is a peripheral component interface express (PCIe) bus conforming to version 3.0 or other versions of the PCIe standard published by the PCI Special Interest Group (PCI-SIG). In some examples, operating system 150, NW I/O device driver 140, VM 161, and application 160 are implemented, at least in part, via cooperation between one or more memory devices included in primary memory 130 (e.g., volatile or non-volatile memory devices), storage devices 165, and elements of circuitry 120 such as processing cores 122-1 to 122-m, where "m" is any positive whole integer greater than 1. In one embodiment, only a single processing core is included. In an embodiment, OS 150, VMM 151, NW I/O device driver 140, VM 161, and application 160 are executed by one or more processing cores 122-1 to 122-m.

In some examples, computing platform 101, includes but is not limited to a server, a server array or server farm, a web server, a network server, an Internet server, a work station, a mini-computer, a main frame computer, a supercomputer, a network appliance, a web appliance, a distributed computing system, multiprocessor systems, processor-based systems, a laptop computer, a tablet computer, a smartphone, a system-on-a-chip (SoC), or a combination thereof. In one example, computing platform 101 is a disaggregated server. A disaggregated server is a server that breaks up components and resources into subsystems (e.g., network sleds). Disaggregated servers can be adapted to changing storage or compute loads as needed without replacing or disrupting an entire server for an extended period of time. A server could, for example, be broken into modular compute, I/O, power, and storage modules that can be shared among other nearby servers.

Circuitry 120 having processing cores 122-1 to 122-m may include various commercially available processors, including without limitation Intel^{®} Atom^{®}, Celeron^{®}, Core (2) Duo^{®}, Core i3, Core i5, Core i7, Itanium^{®}, Pentium^{®}, Xeon^{®} or Xeon Phi^{®} processors, ARM processors, processors from Applied Micro Devices, Inc., and similar processors. Circuitry 120 may include at least one cache 135 to store data.

According to some examples, primary memory 130 may be composed of one or more memory devices or dies which may include various types of volatile and/or non-volatile memory. Volatile types of memory may include, but are not limited to, dynamic random-access memory (DRAM), static random-access memory (SRAM), thyristor RAM (TRAM), or zero-capacitor RAM (ZRAM). Non-volatile types of memory may include byte or block addressable types of non-volatile memory having a 3-dimensional (3-D) cross-point memory structure that includes chalcogenide phase change material (e.g., chalcogenide glass) hereinafter referred to as "3-D cross-point memory". Non-volatile types of memory may also include other types of byte or block addressable non-volatile memory such as, but not limited to, multi-threshold level NAND flash memory, NOR flash memory, single or multi-level phase change memory (PCM), resistive memory, nanowire memory, ferroelectric transistor random access memory (FeTRAM), magneto-resistive random-access memory (MRAM) that incorporates memristor technology, spin transfer torque MRAM (STT-MRAM), or a combination of any of the above. In another embodiment, primary memory 130 may include one or more hard disk drives within and/or accessible by computing platform 101.

Although computing platform 101 may represent any computing platform, some features (e.g., Resource Director Technology), for convenience and/or examples, may be referred to by a name associated with a specific processor architecture (e.g., Intel^{®} 64 and/or IA32), but embodiments are not limited to those features, names, architectures, etc.

Resource Director Technology (RDT), commercially available from Intel Corporation, provides a framework for cache and memory monitoring and allocation capabilities in a processor, including cache monitoring technology (CMT), cache allocation technology (CAT), code and data prioritization (CDP), memory bandwidth monitoring (MBM), and memory bandwidth allocation (MBA). These technologies enable tracking and control of shared resources, such as last-level cache (LLC) and primary memory 130 bandwidth in use by applications 160 and/or VMs 161 running on computing platform 101 concurrently. RDT may aid noisy neighbor detection and help to reduce performance interference, ensuring the performance of key workloads in complex computing environments meets QoS requirements.

Cache Allocation Technology (CAT) provides software-programmable control over the amount of cache space that can be consumed by a given thread, application, virtual machine (VM), or container. This allows, for example, OSs to protect important processes, or hypervisors to prioritize important VMs even in a noisy datacenter environment. The basic mechanisms of CAT include the ability to enumerate the CAT capability and the associated last-level cache (LLC) allocation support via central processing unit (CPU) identifier (CPUID) instructions, and the interfaces for the OS/hypervisor to group applications into classes of service (CLOS) and indicate the amount of last-level cache available to each CLOS. These interfaces are based on Model-Specific Registers (MSRs). As software enabling support is provided, most users can leverage existing software patches and tools to use CAT.

The CMT feature provides visibility into shared platform resource utilization (via level 3 (L3) cache occupancy), which enables improved application profiling, better scheduling, improved determinism, and improved platform visibility to track down applications which may be over-utilizing shared resources and thus reducing the performance of other co-running applications. CMT exposes cache consumption details, which allows resource orchestration software to ensure better Service Level Agreement (SLA) attainment.

MBA technology enables approximate and indirect control over the memory bandwidth available to workloads, enabling interference mitigation and bandwidth shaping for noisy neighbors present in computing platform 101. MBA provides per-core controls over bandwidth allocation. MBA is included between each core and a shared high-speed interconnect which connects the cores in some multi-core processors. This enables bandwidth downstream of shared resources, such as memory bandwidth, to be controlled. MBA is complementary to existing RDT features such as CAT. For instance, CAT may be used to control the last-level cache, while MBA may be used to control memory bandwidth. The MBA feature extends the shared resource control infrastructure introduced with CAT. The CAT architecture defines a per-software-thread tag called a Class of Service (CLOS), which enables running threads, applications or VMs to be mapped to a particular bandwidth. Through CPUID-based enumeration, the presence of the MBA feature can be confirmed on a specific processor. Once enumerated as present, details such as the number of supported classes of service and MBA feature specifics such as throttling modes supported may be enumerated.

In typical usages an enabled OS 150 or VMM 151 will maintain an association of processing threads to a CLOS. Typically, when a software thread is swapped onto a given logical processor, a model specific register (MSR) such as IA32_PQR_ASSOC MSR (for an Intel Corporation Xeon^{®} processor, for example) is updated to reflect the CLOS of the thread. MBA bandwidth limits per-CLOS are specified as a value in the range of zero to a maximum supported level of throttling for the platform (available via CPUID), typically up to 90% throttling, and typically in 10% steps. These steps are approximate, and represent a calibrated value mapped to a known bandwidth-intense series of applications to provide bandwidth control. The resulting bandwidth for these calibration points provided may vary across system configurations, generations, and memory configurations, so the MBA throttling delay values should be regarded as a hint from software to hardware about how much throttling should be applied.

Embodiments of the present invention introduce a practical approach to extend the priority definition of a CLOS in RDT to a new class of service called a memory class of service (called memCLOS or MCLOS herein), and to assign workloads in a processor core to a specific memCLOS, which sets a memory bandwidth priority for each core. Proportional-integral-derivative (PID) controller logic implemented in a P-unit of the processor autonomously detects the saturation of the memory controller (MC) based on MC performance monitoring (perfmon) statistics and proactively applies a delay value to memory bandwidth allocation for a low priority core based on the memCLOS that is attached to that core. In this way, processor firmware preemptively deters memory saturation that can otherwise deteriorate the performance of high priority workloads in a multi-core processor.

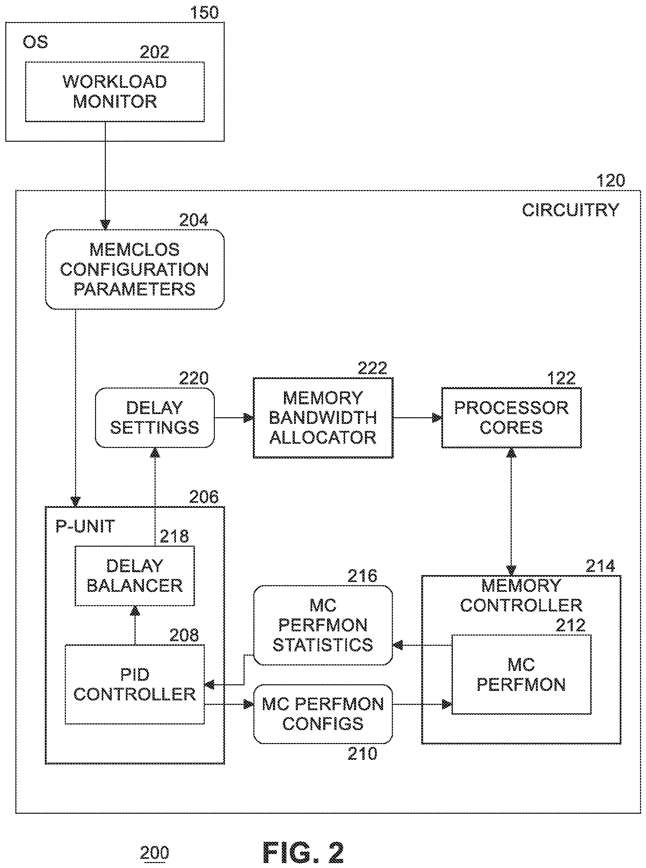

Figure 2 illustrates an example of dynamic control of memory bandwidth allocation according to some embodiments. Arrangement 200 of components includes workload monitor 202 implemented in software. In one embodiment, workload monitor 202 is a component within OS 150 to monitor workloads (e.g., applications 160 or parts of applications) running on processor cores 122. Computing platform hardware 101 includes processor cores 122 (e.g., one or more instances of cores 122-1 to 122-m), memory controller (MC) 214, P-unit 206, and memory bandwidth allocator (MBA) 222, all part of processor circuitry 120. P-unit 206 uses memCLOS configuration parameters 204 set by workload monitor 202 to determine delay settings 220 (also called memory bandwidth settings), which are passed to MBA 222. MBA 222 communicates with processor cores 122, which are coupled to MC 214. As processor cores process instructions of workloads, MC performance monitor (perfmon) 212 within MC 214 gathers MC perfmon statistics 216 based at least in part on parameters set in MC perfmon configurations (configs) 210. MC perfmon statistics 216 are passed to proportional-integral-derivative (PID) controller 208 within P-unit 204, which may then cause delay balancer 218 to change delay settings 220 as needed. Thus, PID controller 208 and delay balancer 218 implement a control loop mechanism employing feedback that is widely used in applications requiring continuously modulated control. PID controller 208 continuously calculates an error value as the difference between a desired set point (SP) and a measured (e.g., monitored) process variable (PV) (such as read-pending queue (RPQ) occupancy for example) and applies a correction based on proportional, integral, and derivative terms (denoted P, I, and D respectively). PID controller automatically applies accurate and responsive corrections to a control function (e.g., memory bandwidth allocation in one embodiment).

In embodiments, delay balancer 218, based at least in part from inputs from PID controller 208, determines delay settings 220 (e.g., memory bandwidth settings) to be applied by MBA 222 for processor cores 122 to adjust the priorities of memory bandwidth for workloads being processed by the cores.

In one embodiment, memCLOS configuration parameters 204 are communicated from workload monitor 202 to P-unit 206 using a mailbox implementation provided by OS 150. A mailbox may be used for SW/BIOS to communicate with the processor for feature discovery and control. There are two registers which form the mailbox interface: one is the interface register which is used to control and specify the command, and the other is the data register. The busy bit is set and the operation to modify or control is specified. If the operation is a write, the data register carries the write data; and if the operation is a read, the content read back is stored in the data register.

In another embodiment, new MSRs (not shown in Figure 2) for storing memCLOS configuration parameters 204 are defined and implemented in processor circuitry 120 to extend existing CLOS configurations as defined in RDT.

In some embodiments, memory bandwidth and latency are mapped to one or more configurable metrics. In one embodiment, a specific metric called RPQ_occupancy can be used. A control loop is implemented in P-unit 206 firmware maintaining favorable memory latency characteristics for high priority tasks and detecting unfavorable scenarios where high priority tasks can suffer performance loss due to memory bandwidth/latency degradation by monitoring, for example, system RPQ_occupancy. Delay balancer 218 in P-unit 206 automatically throttles (delays) access to memory bandwidth of low priority CLOS cores when, for example, a system RPQ_occupancy value crosses above a set point and restores high priority memory bandwidth/latency. Delay balancer 218 uses the RDT/MBA interface provided by MBA 222 to achieve throttling of low priority processor cores 122.

In one embodiment, the plurality of delay settings (e.g., memory bandwidth settings) comprises a delay value for memory bandwidth allocation for a low priority processor core based on a memory class of service (memCLOS) of (e.g., assigned to) the low priority processor core. In an embodiment, the one or more of the plurality of delay settings comprises a delay value of zero (e.g., no delay) for memory bandwidth allocation for a high priority processor core based on a memCLOS of (e.g., assigned to) the high priority processor core.

In one embodiment, a PID controller 208 loop in P-unit 206 firmware monitors, for example, RPQ_occupancy of computing platform 101 and when RPQ_occupancy crosses a set point, delay balancer 218 throttles (delays) the low priority processor cores based on their memCLOS definition. In an embodiment, memCLOS configuration parameters 204 can be programmed by workload monitor 202 as shown below in tables 1 and 2, and MC perfmon configs 210 (such as an RPQ_occupancy setpoint) for the system can be programmed as shown below in table 3. In other embodiments, other MC perfmon statistics 216 can be monitored as determining metrics for dynamically adjusting memory bandwidth allocation (or other shared resources).

Thus, a practical design interface to add additional QoS levels for different priority workloads is accomplished in embodiments with the extension to CLOS called memCLOS.

In an embodiment, memCLOS configuration parameters 204 includes a control bit used to enable the memCLOS feature. When set (e.g., set to 1), the memCLOS feature is enabled for computing platform 101. In one embodiment, the enable memCLOS control bit is implemented as a fuse in circuitry 120 that can be blown when the memCLOS capability is authorized.

**Table 1 - Enable memCLOS included in memCLOS configuration parameters 204.**

| Name | Description | Bits | Width |
|---|---|---|---|
| MemCLOS_EN | Enables MemCLOS feature for the processor package/die. | 1 | 1 |

In an embodiment, memCLOS configuration parameters 204 include an extension of CLOS IDs that map (e.g., correspond) to memCLOS IDs. There are four different types of memCLOS supported, each type being indicated by an identifier (ID). In one embodiment, there are 16 CLOS and 4 memCLOS. In other embodiments, other numbers of CLOS and memCLOS can be used.

**Table 2 - CLOS to MemCLOS mapping included in memCLOS configuration parameters 204.**

| Field Name | Description | Bits | Width |
|---|---|---|---|
| CLOS0MemCLOS | Mapping of CLOS0 to MemCLOS | 1:0 | 2 |
| CLOS1MemCLOS | Mapping of CLOS1 to MemCLOS | 3:2 | 2 |
| CLOS2MemCLOS | Mapping of CLOS2 to MemCLOS | 5:4 | 2 |
| CLOS3MemCLOS | Mapping of CLOS3 to MemCLOS | 7:6 | 2 |
| CLOS4MemCLOS | Mapping of CLOS4 to MemCLOS | 9:8 | 2 |
| CLOS5MemCLOS | Mapping of CLOS5 to MemCLOS | 11:10 | 2 |
| CLOS6MemCLOS | Mapping of CLOS6 to MemCLOS | 13:12 | 2 |
| CLOS7MemCLOS | Mapping of CLOS7 to MemCLOS | 15:14 | 2 |
| CLOS8MemCLOS | Mapping of CLOS8 to MemCLOS | 17:16 | 2 |
| CLOS9MemCLOS | Mapping of CLOS9 to MemCLOS | 19:18 | 2 |
| CLOS10MemCLOS | Mapping of CLOS10 to MemCLOS | 21:20 | 2 |
| CLOS11MemCLOS | Mapping of CLOS11 to MemCLOS | 23:22 | 2 |
| CLOS12MemCLOS | Mapping of CLOS12 to MemCLOS | 25:24 | 2 |
| CLOS13MemCLOS | Mapping of CLOS13 to MemCLOS | 27:26 | 2 |
| CLOS14MemCLOS | Mapping of CLOS14 to MemCLOS | 29:28 | 2 |
| CLOS15MemCLOS | Mapping of CLOS15 to MemCLOS | 31:30 | 2 |

In one embodiment, MC perfmon configs 210 specify closed loop parameter settings which configure a perfmon event to be monitored by MC perfmon 212 (such as RPQ_occupancy, for example), a set point limit of the event threshold, and a time window, for all memCLOS.

**Table 3 - MC Perfmon Configs 210 fields.**

| Field Name | Description | Bits | Width |
|---|---|---|---|
| MemCLOS_Setpoint | MemCLOS set point threshold value. For example, used to set RPQ_occupancy set point value (e.g., threshold) or for whatever event is to be monitored. | 7:0 | 8 |
| MemCLOS_Time Window | MemCLOS time window. For example, used to set RPQ_ occupancy time window or for whatever event is to be monitored. How often to monitor the event (e.g., 1 millisecond (ms), 2 ms, etc.). | 15:8 | 8 |
| MemCLOS_Event | MemCLOS event. Indicates which event will be monitored by MC perfmon 212. | 23:16 | 8 |
| MemCLOS _Event _EN | Enables or disables event monitoring per event. | 24 | 1 |

For multiple events to be monitored, fields memCLOS _Event and memCLOS _Event EN are repeated for each monitored event. In an embodiment, the time window is set for computing an exponential weighted moving average (EWMA) for MC perfmon statistics 216.

In one embodiment, memCLOS configuration parameters 204 includes four sets of memCLOS attributes as shown below, one per memCLOS, as selected by the memCLOS CLOSID field.

**Table 4 - memCLOS attributes per memCLOS included in memCLOS configuration parameters 204.**

| Field Name | Description | Bits | Width |
|---|---|---|---|
| MemCLOS_Priority | Memory priority setting of this memCLOS. | 7:0 | 8 |
| | 0x0=highest priority. | | |
| | 0xFF=lowest priority. | | |
| MemCLOS_Min | Minimum MBA delay for this memCLOS. | 15:8 | 8 |
| MemCLOS_Max | Maximum MBA delay for this memCLOS. | 23:16 | 8 |
| MemCLOS_CLOSID | MemCLOS ID | 25:24 | 2 |

Delay settings 220 as set by delay balancer 218 to specify MBA parameters for use by MBA 222.

Embodiments of the present invention prevent low priority applications from accessing shared resources when a specific threshold in resource usage is reached. In order to achieve this, PID controller 208 monitors MC perfmon statistics 216 and ensures monitored events stay within set limits. PID controller 208 uses a control feedback mechanism which calculates an error value between a specified set point and the MC perfmon statistics, and applies corrections based on proportional, integral, and derivative terms. The output of the PID controller is used by delay balancer 218 to set the MBA delay settings 220 (e.g., memory bandwidth settings) for one or more processor cores 122 depending on their priorities, where high priority processor cores get low delay values for their access to memory while low priority processor cores get high delay values.

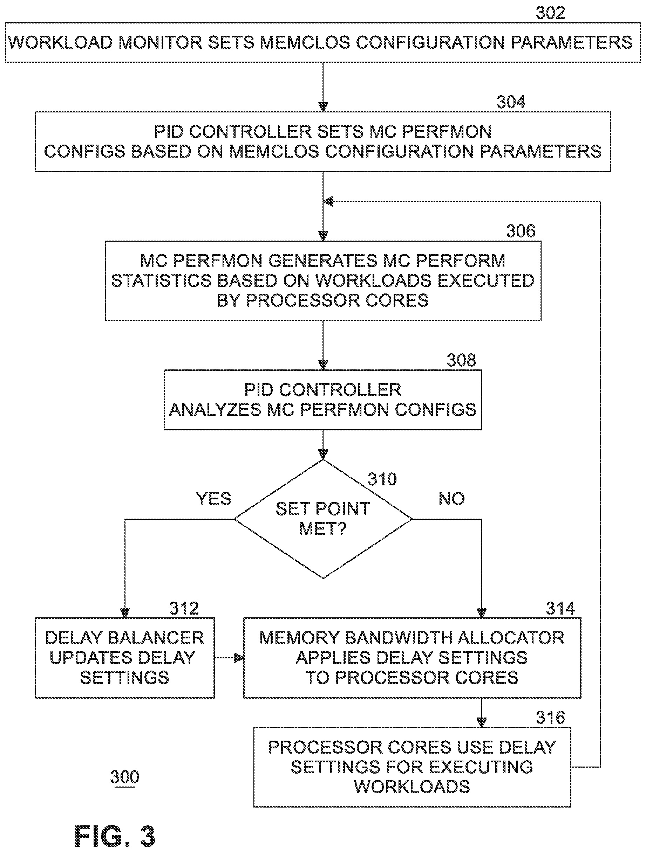

Figure 3 is a flow diagram 300 illustrating example dynamic control of memory bandwidth allocation processing according to some embodiments. At block 302, workload monitor 202 sets memCLOS configuration parameters 204 (e.g., enables the memCLOS functionality and sets CLOS to memCLOS mappings). PID controller 208 (implemented in one embodiment as firmware in P-unit 206) is activated when MemCLOS EN is set. At block 304, PID controller 208 sets MC perfmon configs 210 based at least in part on memCLOS configuration parameters 204. In an embodiment, MC perfmon configs 210 are set to enable memory statistics of a desired event, which gives insight into memory bandwidth utilization. At block 306, MC perfmon 212 generates MC perfmon statistics 216 based on workloads executed by processor cores 122. At block 308, PID controller 208 periodically reads MC perfmon statistics 210 generated by MC perfmon 212 and analyzes the MC perfmon statistics. If PID controller 208 determines, based on analysis of the MC perfmon statistics, that a memCLOS set point has been met, then PID controller 208 causes delay balancer 218 to update delay settings 220 at block 312. Delay settings 220 are used to dynamically throttle memory bandwidth of any low priority processing cores when bandwidth contention issues arise. In an embodiment, delay balancer 218 distributes a delay budget amongst the various memCLOS classes based on a priority value for each memCLOS. For example, high priority processing cores can be given less delay (perhaps even a delay value of zero) and low priority processing cores can be given more delay. Otherwise, if the set point has not been met, no update of the delay settings is made. In either case, processing continues with block 314 where memory bandwidth allocator 222 applies delay settings 220 to processor cores. At block 316, processor cores 122 use the delay settings for executing workloads. Processing continues in a closed loop back at block 306 with the gathering of new MC perfmon statistics. In an embodiment, the closed loop is repeated periodically to continuously dynamically adjust memory bandwidth.

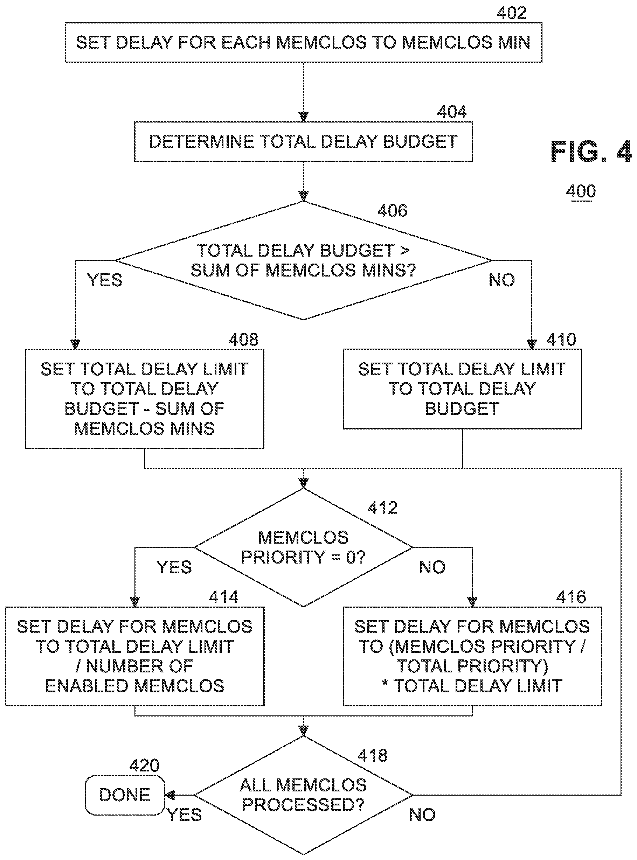

Figure 4 is a flow diagram 400 illustrating delay balancer 218 processing according to some embodiments. At block 402, delay balancer 218 sets a delay value for each memCLOS to a minimum memCLOS value. At block 404, delay balancer 218 determines a total delay budget for circuitry 120. In an embodiment, the total delay budget is set to the output of PID controller 208 multiplied by the number of enabled memCLOS. At block 406, if the total delay budget is greater than the sum of the memCLOS minimum values, then at block 408, delay balancer 218 sets a total delay limit to the total delay budget minus the sum of the memCLOS minimum values. Otherwise, delay balancer 218 sets the total delay limit to the total delay budget at block 410. Processing continues with a first memCLOS at block 412. If the priority of this memCLOS is 0 (indicating high priority in one embodiment), then at block 414 delay balancer 218 sets a delay for this memCLOS to the total delay limit divided by the number of enabled memCLOS. If the priority of this memCLOS is not 0 (indicating a lower priority than the highest setting), then at block 416 delay balancer 218 sets the delay for this memCLOS to the priority of this memCLOS divided by the total of all priority values multiplied by the total delay limit. Thus, in one embodiment, setting each of the plurality of delay settings to a delay value is based at least in part on the total delay budget and the priority of the selected memCLOS. Next, at block 418 if not all memCLOS have been processed, then block 412, 414 or 416 are performed for the next memCLOS. If all memCLOS have been processed, delay balancer processing ends at block 420. The updated delay settings 220 are then input to memory bandwidth allocator 222.

The dynamic resource controller as described herein which uses RDT features such as memory bandwidth allocation (MBA) can be easily adopted in different CSP SW frameworks without requiring any changes to their SW frameworks. Embodiments may provide a fast response (target 1millisecond (ms)) through a control mechanism (e.g., P-unit 206) in processor firmware. When bad behavior is detected, processor firmware logic in P-unit 204 throttles bandwidth to lower priority memCLOS through MBA in a closed loop action which may help remove potential performance jitter within a fast interval. The fast action may make noisy workload impact unnoticeable to end users. Embodiments of the present invention are autonomous, dynamic, and do not involve any additional hardware overhead. Current RDT solutions are static and can be overly restrictive for cases where throttling is not needed. Embodiments provide a dynamic controller that throttles memory bandwidth access only when needed. Measurements show that if the control loop is implemented in SW, the control loop can consume almost a single processor core. Embodiments can save a single virtual central processing unit (vcpu) compute resource by running the control mechanism in the package control unit (PCU) controller.

Methods, apparatus, systems, non-transitory computer-readable storage media, etc. according to embodiments, any or any aspect of which may be referred to as dynamic resource control for sub-NUMA clustering mode or DRC for SNC, may be implemented to extend hardware performance management control (e.g., DRC as described above) feature functionality for multi-die scalability and/or other reasons.

In an embodiment, cores of a processor and cache slices co-located with the cores may be grouped into a cluster. A memory space may be partitioned into address regions. The cluster may be associated with an address region from the address regions. Each memory address of the address region may be mapped to one or more of the cache slices grouped into the cluster. A cache access from one or more of the cores grouped into the cluster may be biased to the address region based on the association of the cluster with the address region.

In an embodiment, data required by a core grouped into the cluster may be stored in the address region associated with the cluster. In an embodiment, data required by a core grouped into the cluster may be stored in an address region associated with a second cluster. The second cluster may be a cluster physically closest to the cluster. In an embodiment, the address region may include a contiguous block of memory space. In an embodiment, each memory address of the address region may be evenly hashed across the cache slices grouped into the cluster. In an embodiment, one or more memory controllers may be assigned to the address region. The one or more memory controllers assigned to the address region may manage data flow to and from the address region. The one or more memory controllers may include a memory controller physically closest to the address region. In an embodiment, the cluster may be visible to an operating system as a non-uniform memory access (NUMA) node.

A cluster of adjacent cores and the co-located cache slices grouped together may be referred to as a sub-NUMA cluster, so approaches to such partitioning cores as discussed above and below may be referred to as sub-NUMA clustering (SNC). However, embodiments are not limited to approaches known as SNC, as they may also be implemented in approaches known as NUMA per socket (NPS) or any other similar technique.

Embodiments may include virtualization of a hardware performance controller (which may, for convenience, be referred to as a DRC, but embodiments are not limited to a DRC) and/or hosting of one or more control loops and hardware/software interfaces in a hardware DRC (HWDRC) instance (usually in a power controller or P-unit). Various implementations may include hosting virtual DRC instances to manage a subset of cores in one or more I/O dies or across one or more CPU dies, a single I/O P-unit hosting the virtual DRC instances, and one virtual DRC per compute die (which may provide improved balance of scalability and complexity), each as may be further described below.

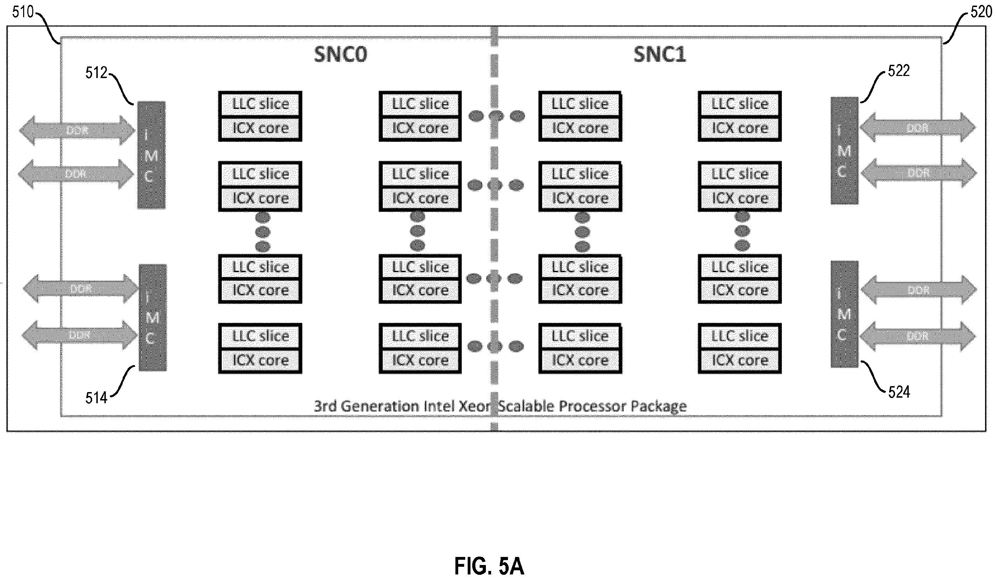

In embodiments, a number of integrated memory controllers (iMCs) are divided equally among a number of cores. For example, Figure 5A shows an SNC2 mode (two clusters 510 and 520) on a 3rd generation Intel^{®} Xeon^{®} processor 500, with two iMCs per cluster (cluster 510 with iMCs 512 and 514; cluster 520 with iMCs 522 and 524).

In embodiments, SNC mode may make a certain set of memory controllers and accompanying LLC slices exclusively available to a particular SNC domain. Doing so may help achieve low latency and high throughput. Moreover, if all the cores in different SNC domains target their own dedicated memory controller then they do not affect the performance of each other. However, in the same domain cores do affect the performance of each other. SNC may cause a few compatibility issues with other features, such as the Dynamic Resource Controller (DRC). Embodiments may resolve these incompatibilities.

In embodiments, a DRC may allow monitoring the utilization of all the memory controllers in the system and apply throttling to the cores belonging to a particular class of service (COS or CLOS) when memory loading thresholds are exceeded. This approach works very well for non-SNC configurations because, for example, the SOC may operate in a "flat" mode where all cores can interleave traffic across all memory controllers.

For an SNC mode, if the same type of workload is running on all the SNC domains (clusters) with equal loading, then the global utilization method of the DRC which collects loading statistics from all of the memory controllers is effective. However, when each SNC domain is running different types of workloads and traffic, the global utilization method might not be effective. Independent utilization of each iMC from each SNC domain should be measured, as the SNC domains operate largely independently. Therefore, embodiments may include shifting the DRC to monitor memory controllers per-SNC-cluster, as may be further described below.

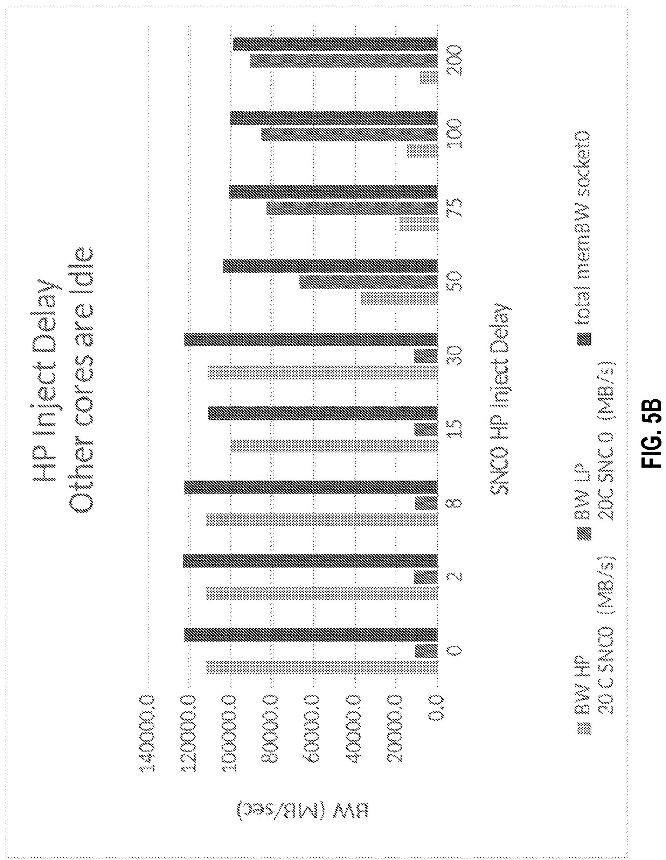

For example, Figure 5B shows a typical high-priority and low-priority workload (HP/LP) management mode for an HWDRC, with a fixed setpoint on SNC node 0 (SNC0) with SNC node 1 (SNC1) idle. In the experiment for this example, there were 20 HP cores and 20 LP cores running a bandwidth-intense test app (MLC) with a fixed DRC setpoint of 80. The setpoint of 80 reflects memory controllers' utilization above which the HWDRC throttles the LP cores. For HP cores, the delay which helps reduce the pressure on the memory controller from HP was slowly started to be injected. The graph shows that when the HP cores are injected with more and more delay, meaning they are not utilizing enough bandwidth (BW), the LP BW is recovering. This is expected behavior of the HWDRC where when the HP cores are not using enough BW in the system, the LP should be able to reuse the BW for itself.

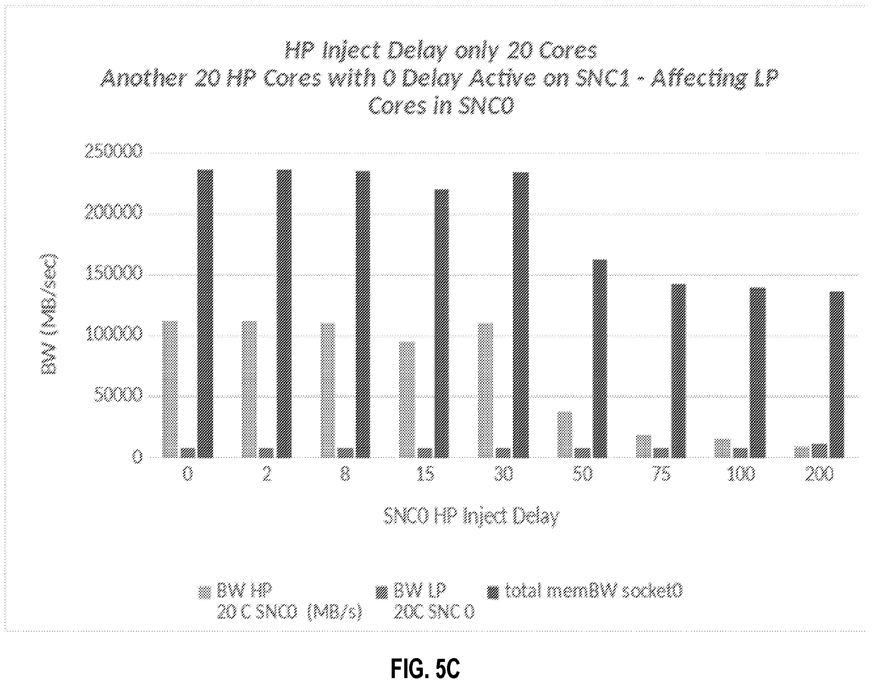

As another example, Figure 5C shows that the LP workload on SNC node 0 (SNC0) is being affected by traffic on the SNC node 1. This is because the design of the HWDRC is implemented for the SNC-disabled mode where all the requests from the cores are interleaved to multiple memory controllers. Moreover, it picks the maximum memory loading (the maximum performance monitor (PMON) delta) from all compute dies which ends up throttling a different SNC cluster's LP cores. This is not the expected behavior, and this unexpected throttling would be a customer-visible performance bug because SNC0 has BW available to give to the LP core without affecting the tasks on SNC1.

According to existing approaches, previous generations of DRC were developed for non-SNC configurations. DRC throttles the LP cores when a certain memory utilization threshold has been exceeded to ensure that high-priority applications have preferential access to memory bandwidth and a more favorable operating point on the latency/bandwidth curve. In an SoC architecture where compute engines along with memory controllers are divided into multiple chiplets in such a way that a few cores along with their own memory controllers are on an individual chiplet, this HWDRC solution by default would use the utilization metrics from all memory controllers and pick the maximum delta between all the chiplets and send this information through a PID controller before calculating the throttling values for each workload depending on their priorities.

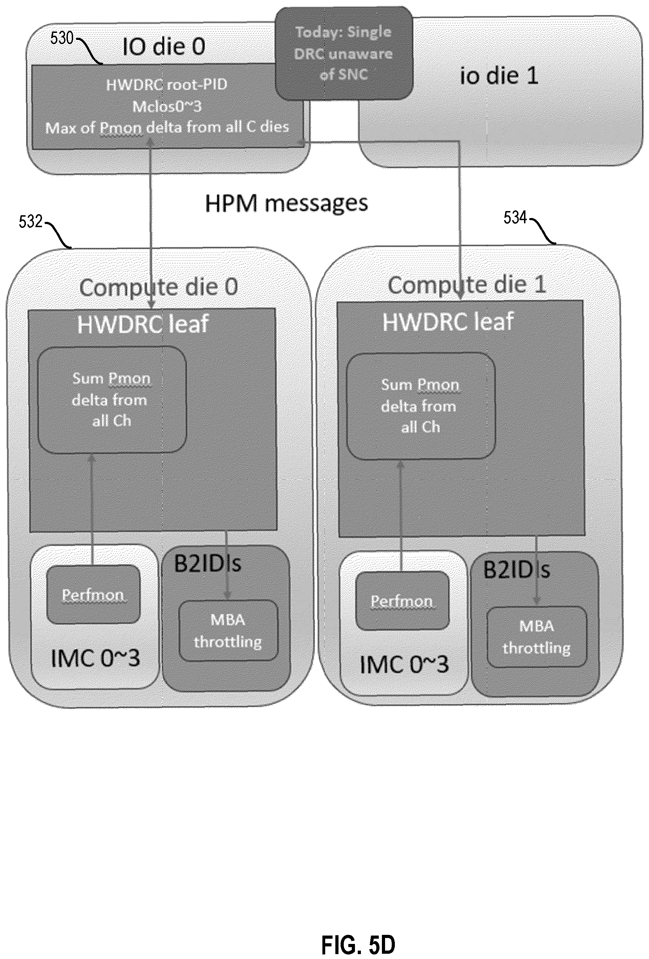

Figure 5D shows an existing implementation of an HWDRC with common telemetry aggregation from all compute dies and uniform control, both of which may be shortcomings of existing approaches. This non-SNC version of a DRC 530 is implemented with an assumption that all the requests from the cores are interleaved across all the memory channels across all compute dies (e.g., 532 and 534). Therefore, picking the max PMON delta (max memory loading) from all compute dies was sufficient. However, it does not work well for the SNC enabled mode because what happens on one SNC node can result in over-throttling of LP cores in another node, leading to a major reduction in system throughput, unexpected throttling, and a customer-visible performance bug.

Using the maximum of the utilization delta between the chiplets may result in an issue for the case of SNC mode where each chiplet is divided into its own NUMA node. Workloads that run in a NUMA node should not impact the ones that are running on other nodes. But, since the existing DRC considers the maximum across all chiplets, it will end up throttling a workload running on a NUMA node due to the behavior of another workload running on another NUMA node. Instead of looking at the maximum of the utilization delta between each chiplet, embodiments may include independently measuring the utilization of each compute chiplet to remove the mutual impacts between workloads running on different NUMA nodes. Furthermore, using a different PID controller for each chiplet to calculate the throttling amount for each workloads on respective compute chiplets may help achieve results comparable to that of non-SNC mode.

Therefore, embodiments may include a virtual DRC, comprising one or more instances of a DRC control loop (such as a PID controller or other algorithms), and one or more instances of a management interface (e.g., Model-Specific Registers (MSRs), memory-mapped I/O (MMIO), or a combination, enumerated via the Advanced Configuration and Power Interface (ACPI). The relationship between control loops (N) and software interfaces (M) may be 1:1, or N:M where N≥M.

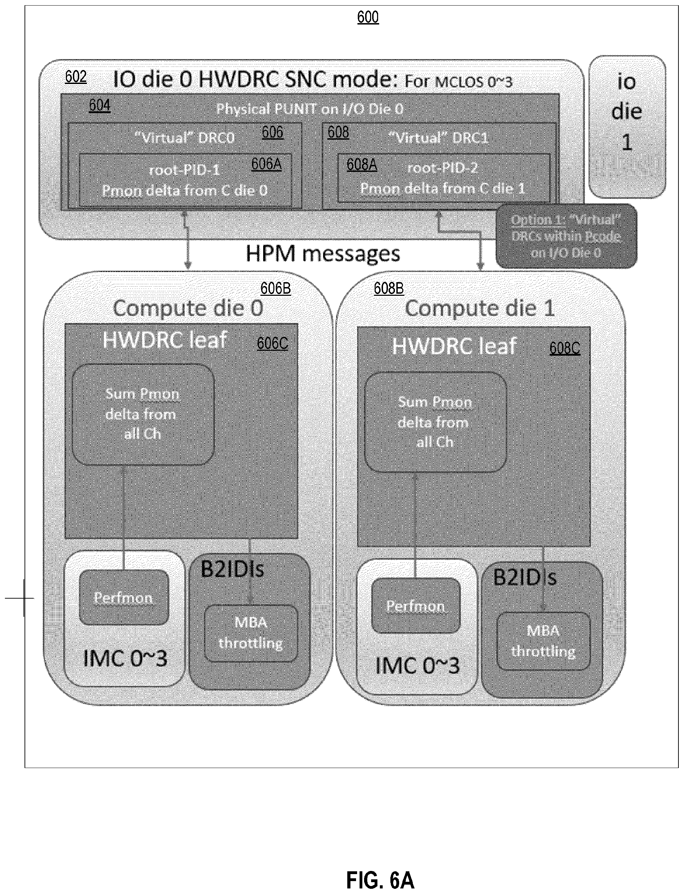

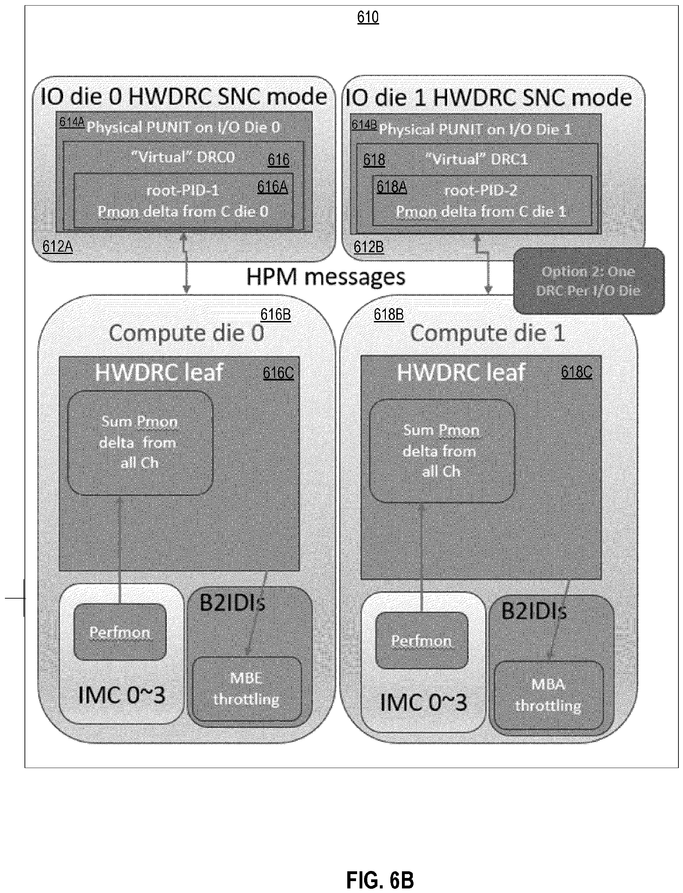

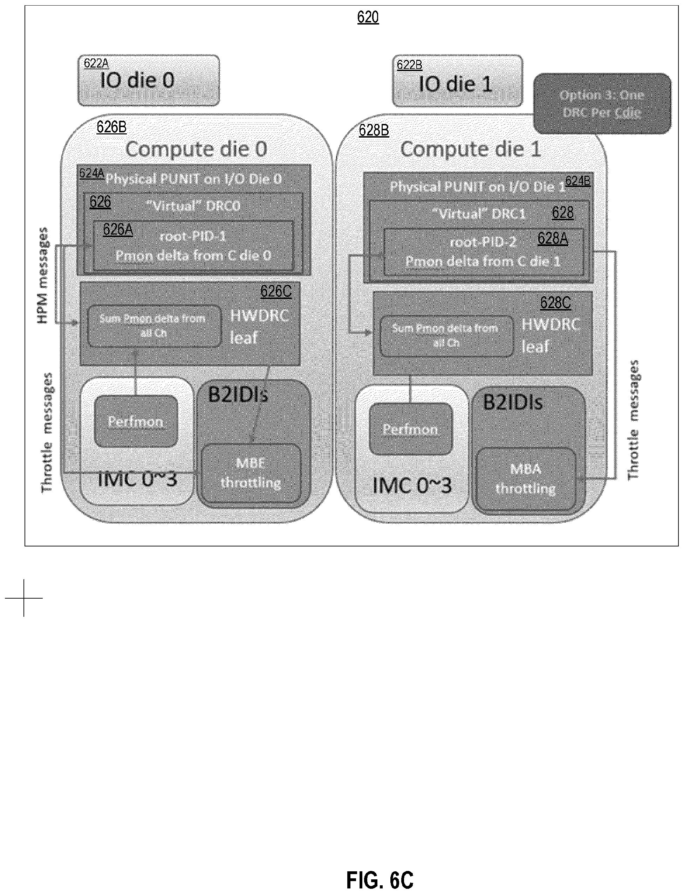

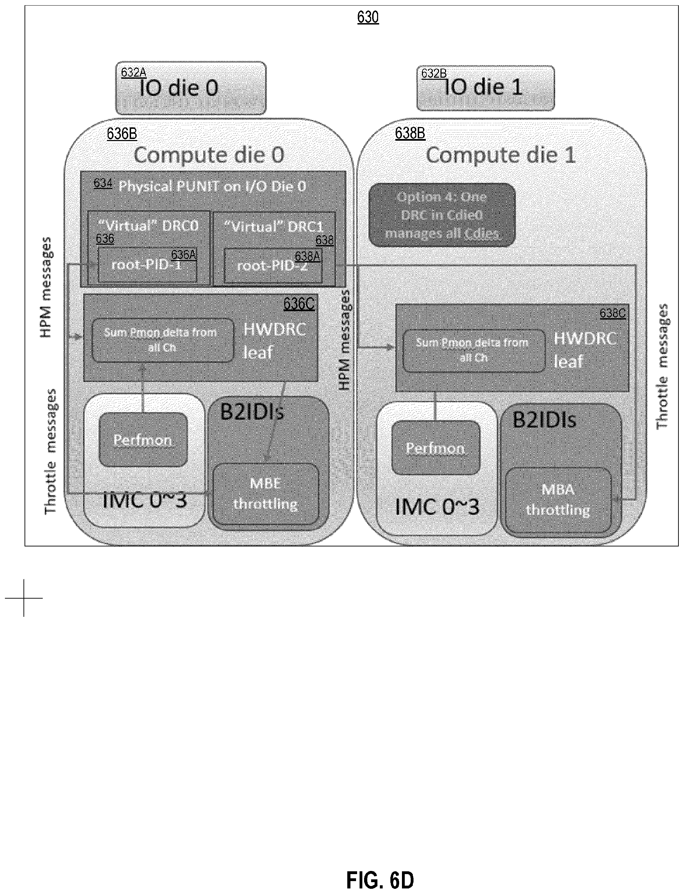

Figures 6A, 6B, 6C, and 6D illustrate implementations of a virtual DRC according to various embodiments.

Figure 6A shows an implementation 600 with multiple virtual DRCs (e.g., 606 and 608) centralized in I/O die 602. This approach may have the lowest implementation change costs versus an existing DRC implementation. According to this approach, the physical Punit (power microcontroller) 604 on the I/O die 602 continues to host the DRC, but two instances of a virtual DRC (e.g., 606 and 608) are created, one (DRC0) with root-PID-1 (e.g., 606A) to manage compute die 0 (e.g., 606B) with a first HWDRC leaf (e.g., 606C), and a second instance (DRC1) with root-PID-2 (e.g., 608A), to manage compute die 1 (e.g., 608B) with a second HWDRC leaf (e.g., 608C). In this instantiation, telemetry inputs are split such that DRC0 monitors and manages only (e.g., the loading on) a memory controller on compute die 0, and DRC1 monitors and manages only (e.g., the loading on) a memory controller on compute die 1. This version reuses much of the same infrastructure as a "flat mode" DRC, minimizing change, but may have a scalability drawbacks, such as if the number of compute dies increases to a large number (in which case the single Punit controller may be overwhelmed by telemetry data and compute requirements for the large number of compute dies).

Figure 6B shows an implementation 610 that may be an improvement in that a Punit (e.g., 614A) in I/O die 0 (e.g., 612A) is used to implement a virtual DRC (e.g., 616) with a root-PID (e.g., 616A) to manage compute die 0 (e.g., 616B) with a first HWDRC leaf (e.g., 616C), and a different Punit (e.g., 614B) in I/O die 1 (e.g., 618) is used to implement a virtual DRC (e.g., 618) with a root-PID (e.g., 618A) to manage compute die 1 (e.g., 618B) with a second HWDRC leaf (e.g., 618C). This approach may provide more Punit resources per compute die (e.g., faster response times, lower loading); however this may be suboptimal if the number of compute dies and number of I/O dies are mismatched by a large ratio (e.g., many compute dies, few I/O dies).

Figure 6C shows an implementation 620 with multiple virtual DRCs (e.g., 626 and 628), each with a root-PID (e.g., 626A and 628A), in multiple Punits (e.g., 624A and 624B) distributed across the compute dies (e.g., 626B and 628B), each with an HWDRC leaf (e.g., 626C and 628C), instead of I/O dies (e.g., 622A and 622B). This approach may be more scalable, as one virtual DRC instance is instantiated in each Punit in each compute die. This approach enables not only each controller to have increased Punit compute resources, the load on each Punit is also distributed, and software may interface with each Punit independently, further distributing compute loads. As core counts and compute die counts increase, the advantages of this approach become more acute. Also, the localization of telemetry per compute die provides for elimination of cross-die bulk telemetry flows in this implementation.

Figure 6D shows an implementation 630 that is similar to that of Figure 6C, but the virtual DRC instances (e.g., 636 and 638), each with a root-PID (e.g., 636A and 638A), are consolidated into the Punit (e.g., 634) of compute die 0 (e.g., 636B), with a first HWDRC leaf (e.g., 636C), instead of compute die 1 (e.g., 638B), with a second HWDRC leaf (e.g., 638C), or I/O dies (e.g., 632A and 632B). This simplifies the implementation and synchronization but may include cross-die telemetry communication, and Punit compute resources on compute die 0 are used to manage all compute dies, including either more Punit compute resources or slowing the response time of any particular virtual DRC instance.

Note that in certain implementations there may be compute dies that support SNC domains internally, in which case the implementations described may be extended to cover this case - for instance handling this case using multiple virtual DRCs or multiple Punit based implementations.

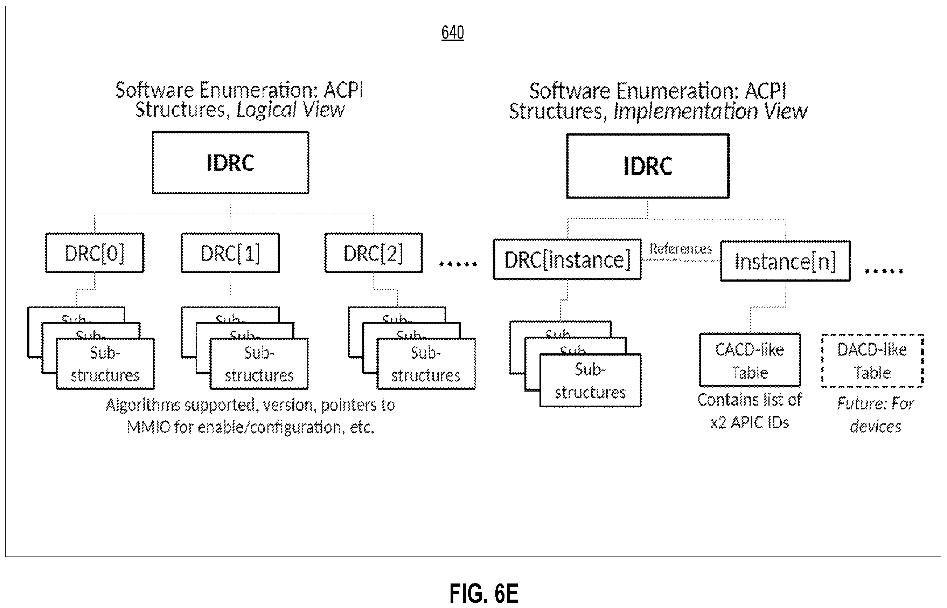

In embodiments, the hardware/software interfaces are updated to comprehend the concept of multiple virtual DRC instances. Given that DRC enumerates via ACPI using the "IDRC" (Integrated DRC) table, and interfaces via MMIO, the existing interfaces are extended. For example, see IDRC architectural block diagram 640 in Figure 6E.

High-level architectural details, such as localization of DRC control per compute die or per IO die, of embodiments are described above. Lower level details of an embodiment are described below. Descriptions may include DRC-specific terms such as "CLOS to MCLOS" mapping, for example to describe forms of application tagging indirection, but embodiments are not limited to these terms, tags, etc.

In an SNC-enabled mode according to embodiments, an HWDRC may be implemented in an SNC enabled system such that each SNC node is assigned a distinct PID controller, and each SNC node is aligned with a specific compute die. Each PID controller may operate autonomously, monitoring and managing the memory controller utilization of its corresponding compute die, to selectively throttle only the low-power (LP) cores within that compute die.

In embodiments, HWDRC SNC mode could be used for both SNC enabled and SNC disabled cases. For example, for SNC2 (2 SNC nodes in one socket):
- SNC enabled: 2 HWDRC instances for 2 SNC2 nodes, each SNC node having 4 mclos, for a total of 8 mclos for two SNC node in one socket.
- SNC disabled: 2 HWDRC instances in 2 compute die, but 2 HWDRC instances have the same pmclos settings, same pmclos mapping.

In embodiments, Sub-NUMA Clustering (SNC) may be a default mode in which, for example, each compute die has its own memory, each compute die is treated as a separate node, and/or each compute die uses only its own memory controllers. SNC mode may be used to make a certain set of memory controllers and accompanying LLC slices exclusively available to a particular SNC domain and minimize memory access latencies.

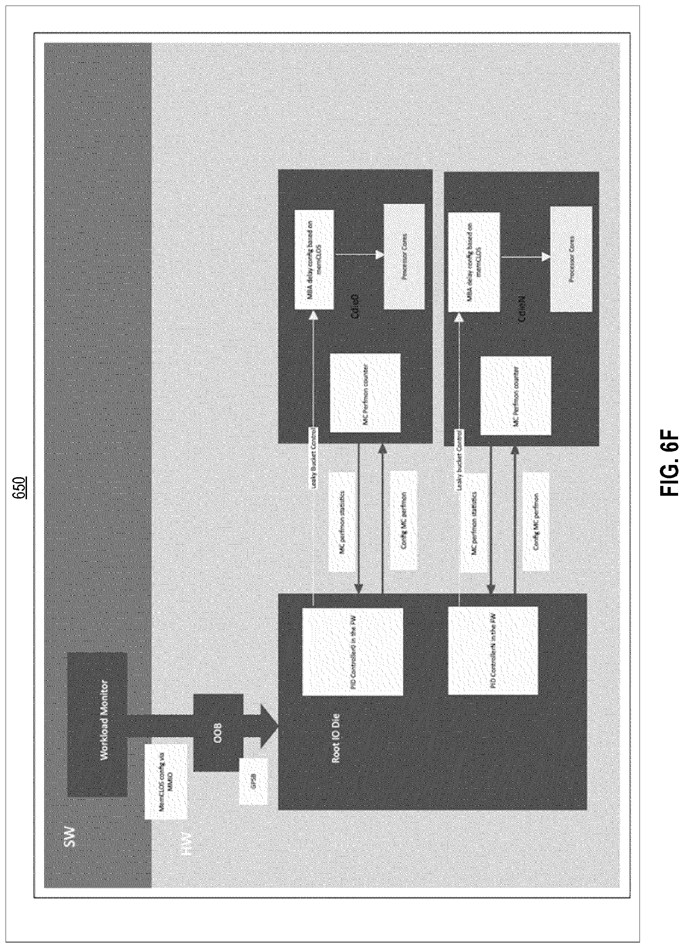

For example, Figure 6F is a block diagram of an SNC configuration according to embodiments.

Embodiments may provide for all memory requests to be interleaved in an SNC-disable mode. Therefore, a single PID controller may be implemented which takes the maximum of the perfmon deltas from all compute dies as the input was enough.

For SNC mode, embodiments may use logic (e.g., P-unit firmware) that supports multiple PIDs (e.g., one per compute die). The logic may still control individual leaves, so the HPM or the TPMI interface may be unchanged. A logic leaf (e.g., Pcode) may continue to send the telemetry information to root logic. The root logic may implement one PID and/or a separate EWMA (exponentially weighted moving average) filter per compute die and the input may be performance monitoring (perfmon) counters of the local die memory controller as per the SNC configuration. The output from the root logic may also be per compute die controlling the local die core memory bandwidth throttling.

The root logic may create an array pid_t[] of PID controllers with the number of compute dies, along with other arrays to store the previous time stamp counter snapshot, die perfmon data, previous time window, PID output delta, and previous PID output for the algorithm. When SNC is enabled, it will use the compute die number as the index of this array to keep all these separate for each compute die. When SNC is disabled, the root logic uses only index 0 in this array to calculate the package throttling values.

Example apparatuses, methods, etc.
1. An apparatus comprising:
   a plurality of clusters of processor cores;
   a plurality of memory bandwidth allocators, at least one of the plurality of memory bandwidth allocators per cluster, to apply memory bandwidth settings to one or more processor cores of an associated cluster to dynamically adjust priorities of memory bandwidth allocated for one or more workloads to be processed by the one or more processor cores of the associated cluster;
   a plurality of memory controllers, at least one of the plurality of memory controllers per cluster of processor cores;
   a plurality of performance monitors, at least one of the plurality of performance monitors per cluster, to generate performance monitoring statistics by monitoring performance of the one or more workloads by one or more processor cores based at least in part on performance monitoring configuration parameters; and
   a hardware dynamic resource controller configurable into a plurality of virtual dynamic resource controllers, wherein one virtual dynamic resource controller per cluster is to set the performance monitoring configuration parameters based at least in part on memory class of service parameters, and to set memory bandwidth settings per cluster based at least in part on the performance monitoring statistics.
2. The apparatus of claim 1, wherein each of the plurality of virtual dynamic resource controllers includes a proportional-integral-derivative (PID) controller to continuously calculate an error value as a difference between a set point and a process variable of the performance monitoring statistics.
3. The apparatus of claim 2, wherein each of the plurality of virtual dynamic resource controllers includes a memory bandwidth balancer to generate the memory bandwidth settings based at least in part on the error value.
4. The apparatus of any of claims 1-3, wherein one or more of the plurality of memory bandwidth settings comprises a first value for memory bandwidth allocation for a low priority processor core based on an assigned memory class of service of the low priority processor core.
5. The apparatus of claim 4, wherein one or more of the plurality of memory bandwidth settings comprises a second value for memory bandwidth allocation for a high priority processor core based on an assigned memory class of service of the high priority processor core, the first value being less than the second value.
6. The apparatus of any of claims 1-5, wherein a class of service of one of the processor cores corresponds to one of the memory class of service parameters.
7. The apparatus of claim 2 or 3, wherein the performance monitoring configuration parameters comprise the set point, a time window, a plurality of events, and a plurality of enable bits corresponding to the plurality of events.
8. The apparatus of any of claims 1-7, wherein the memory class of service parameters comprise a plurality of sets of parameters, each set for a selected memory class of service including a priority, a minimum delay value, and maximum delay value, and an identifier of the selected memory class of service.
9. An apparatus comprising:
   one or more input/output dies;
   a plurality of compute dies, each of the plurality of compute dies including a plurality of processor cores;
   a plurality of memory bandwidth allocators, at least one of the plurality of memory bandwidth allocators per compute die, to apply memory bandwidth settings to one or more processor cores of an associated compute die to dynamically adjust priorities of memory bandwidth allocated for one or more workloads to be processed by the one or more processor cores of the associated compute die;
   a plurality of memory controllers, at least one of the plurality of memory controllers per compute die;
   a plurality of performance monitors, at least one of the plurality of performance monitors per compute die, to generate performance monitoring statistics by monitoring performance of the one or more workloads by one or more processor cores of the associated compute die based at least in part on performance monitoring configuration parameters; and
   one or more hardware dynamic resource controllers configurable into a plurality of virtual dynamic resource controllers, wherein one virtual dynamic resource controller per compute die is to set the performance monitoring configuration parameters based at least in part on memory class of service parameters, and to set memory bandwidth settings per compute die based at least in part on the performance monitoring statistics.
10. The apparatus of claim 9, wherein one of the one or more input/output dies includes one of the one or more hardware dynamic resource controllers.
11. The apparatus of claim 9, wherein each of the one or more input/output dies includes a corresponding one of the one or more hardware dynamic resource controllers.
12. The apparatus of claim 9, wherein one of the plurality of compute dies includes one of the one or more hardware dynamic resource controllers.
13. The apparatus of claim 9, wherein each of the plurality of compute dies includes a corresponding one of the one or more hardware dynamic resource controllers.
14. The apparatus of any of claim 9-13, wherein each of the plurality of virtual dynamic resource controllers includes:
   a proportional-integral-derivative (PID) controller to continuously calculate an error value as a difference between a set point and a process variable of the performance monitoring statistics; and
   a memory bandwidth balancer to generate the memory bandwidth settings based at least in part on the error value.
15. A method comprising:
   receiving memory class of service parameters;
   setting performance monitoring configuration parameters, based at least in part on the memory class of service parameters, for use by a plurality of performance monitors, at least one of the plurality of performance monitors per cluster of a plurality of clusters of processor cores, to generate performance monitoring statistics by monitoring performance of one or more workloads by one or more processor cores of an associated cluster based at least in part on performance monitoring configuration parameters;
   receiving the performance monitoring statistics from the performance monitor; and
   generating, by at least one of a plurality of virtual dynamic resource controllers hosted by a hardware dynamic resource controller configured into one of the plurality of virtual dynamic resource controllers per cluster, based at least in part on the performance monitoring statistics, a plurality of memory bandwidth settings to be applied by one or more memory bandwidth allocators to one or more processor cores of an associated cluster to dynamically adjust priorities of memory bandwidth allocated for the one or more workloads to be processed by the one or more processor cores of the associated cluster.
16. The method of claim 15, comprising periodically repeating receiving the performance monitoring statistics from the performance monitors and generating the plurality of memory bandwidth settings to be applied by the one or more memory bandwidth allocators to the one or more processor cores of the associated cluster to dynamically adjust priorities of memory bandwidth allocated for the one or more workloads to be processed by the one or more processor cores of the associated cluster.
17. The method of claim 15 or 16, wherein generating the plurality of memory bandwidth settings comprises continuously calculating an error value as a difference between a set point and a process variable of the performance monitoring statistics and generating the memory bandwidth settings based at least in part on the error value.
18. The method of any of claims 15-17, wherein the performance monitoring configuration parameters comprise a set point, a time window, a plurality of events, and a plurality of enable bits corresponding to the plurality of events.
19. The method of any of claims 15-18, wherein the memory class of service parameters comprise a plurality of sets of parameters, each set for a selected memory class of service including a priority, a minimum delay value, and maximum delay value, and an identifier of the selected memory class of service.
20. The method of claim 19, wherein generating the plurality of memory bandwidth settings comprises determining a total delay budget and setting each of the plurality of memory bandwidth settings to a delay value based at least in part on the total delay budget and the priority of the selected memory class of service.
21. An apparatus comprising:
   a plurality of processor cores;
   a plurality of memory bandwidth settings;
   a memory bandwidth allocator, coupled to the plurality of processor cores, to apply the memory bandwidth settings to the plurality of processor cores to dynamically adjust priorities of memory bandwidth allocated for one or more workloads to be processed by the plurality of processor cores;
   a memory controller, coupled to the plurality of processor cores, the memory controller including a performance monitor to generate performance monitoring statistics by monitoring performance of the one or more workloads by the plurality of processor cores based at least in part on performance monitoring configuration parameters; and
   a power controller (P-unit), coupled to the memory bandwidth allocator and the memory controller, to set the performance monitoring configuration parameters based at least in part on memory class of service parameters, and to set the memory bandwidth settings based at least in part on the performance monitoring statistics received from the performance monitor.
22. The apparatus of claim 21, wherein the P-unit comprises:
   a proportional-integral-derivative (PID) controller to continuously calculate an error value as a difference between a set point and a process variable of the performance monitoring statistics; and
   a memory bandwidth balancer to generate the memory bandwidth settings based at least in part on the error value.
23. The apparatus of claim 21 or 22, wherein one or more of the plurality of memory bandwidth settings comprises a first value for memory bandwidth allocation for a low priority processor core based on an assigned memory class of service of the low priority processor core.
24. The apparatus of claim 23, wherein one or more of the plurality of memory bandwidth settings comprises a second value for memory bandwidth allocation for a high priority processor core based on an assigned memory class of service of the high priority processor core, the first value being less than the second value.
25. The apparatus of any of claims 21-24, wherein a class of service of one of the plurality of processor cores corresponds to one of the memory class of service parameters.
26. The apparatus of claim 22, wherein the performance monitoring configuration parameters comprise the set point, a time window, a plurality of events, and a plurality of enable bits corresponding to the plurality of events.
27. The apparatus of any of claims 21-26, wherein the memory class of service parameters comprise a plurality of sets of parameters, each set for a selected memory class of service including a priority, a minimum delay value, and maximum delay value, and an identifier of the selected memory class of service.
28. A system comprising:
   a workload monitor to set memory class of service parameters; and
   processor circuitry, the processor circuitry including
      a plurality of processor cores;
      a plurality of memory bandwidth settings;
      a memory bandwidth allocator, coupled to the plurality of processor cores, to apply the memory bandwidth settings to the plurality of processor cores to dynamically adjust priorities of memory bandwidth allocated for one or more workloads to be processed by the plurality of processor cores;
      a memory controller, coupled to the plurality of processor cores, the memory controller including a performance monitor to generate performance monitoring statistics by monitoring performance of the one or more workloads by the plurality of processor cores based at least in part on performance monitoring configuration parameters; and
      a P-unit, to set the performance monitoring configuration parameters based at least in part on the memory class of service parameters, and to set the memory bandwidth settings based at least in part on the performance monitoring statistics received from the performance monitor.
29. The system of claim 28, wherein the P-unit comprises:
   a proportional-integral-derivative (PID) controller to continuously calculate an error value as a difference between a set point and a process variable of the performance monitoring statistics; and
   a memory bandwidth balancer to generate the memory bandwidth settings based at least in part on the error value.
30. The system of claim 28 or 29, wherein one or more of the plurality of bandwidth settings comprises a first value for memory bandwidth allocation for a low priority processor core based on an assigned memory class of service of the low priority processor core.
31. The system of claim 30, wherein one or more of the plurality of memory bandwidth settings comprises a second value for memory bandwidth allocation for a high priority processor core based on an assigned memory class of service of the high priority processor core, the first value being less than the second value.
32. The system of any of claims 28-31, wherein a class of service of one of the plurality of processor cores corresponds to one of the memory class of service parameters.
33. The system of claim 29, wherein the performance monitoring configuration parameters comprise the set point, a time window, a plurality of events, and a plurality of enable bits corresponding to the plurality of events.
34. The system of any of claims 28-31, wherein the memory class of service parameters comprise a plurality of sets of parameters, each set for a selected memory class of service including a priority, a minimum delay value, and maximum delay value, and an identifier of the selected memory class of service.
35. A method comprising:
   receiving memory class of service parameters;
   setting performance monitoring configuration parameters, based at least in part on the memory class of service parameters, for use by a performance monitor of a memory controller to generate performance monitoring statistics by monitoring performance of one or more workloads by a plurality of processor cores based at least in part on the performance monitoring configuration parameters;
   receiving the performance monitoring statistics from the performance monitor; and
   generating, based at least in part on the performance monitoring statistics, a plurality of memory bandwidth settings to be applied by a memory bandwidth allocator to the plurality of processor cores to dynamically adjust priorities of memory bandwidth allocated for the one or more workloads to be processed by the plurality of processor cores.
36. The method of claim 35, comprising periodically repeating receiving the performance monitoring statistics from the performance monitor and generating the plurality of memory bandwidth settings to be applied by the memory bandwidth allocator to the plurality of processor cores to dynamically adjust priorities of memory bandwidth allocated for the one or more workloads to be processed by the plurality of processor cores.
37. The method of claim 35 or 36, wherein generating the plurality of memory bandwidth settings comprises continuously calculating an error value as a difference between a set point and a process variable of the performance monitoring statistics and generating the memory bandwidth settings based at least in part on the error value.
38. The method of any of claims 35-37, wherein the performance monitoring configuration parameters comprise the set point, a time window, a plurality of events, and a plurality of enable bits corresponding to the plurality of events.
39. The method of any of claims 35-38, wherein the memory class of service parameters comprise a plurality of sets of parameters, each set for a selected memory class of service including a priority, a minimum delay value, and maximum delay value, and an identifier of the selected memory class of service.
40. The method of claim 39, wherein generating the plurality of memory bandwidth settings comprises determining a total delay budget and setting each of the plurality of memory bandwidth settings to a delay value based at least in part on the total delay budget and the priority of the selected memory class of service.
41. A method comprising:
   receiving memory class of service parameters; and
   generating, based at least in part on the memory class of service parameters, a plurality of memory bandwidth settings to be applied by a memory bandwidth allocator to dynamically adjust priorities of memory bandwidth allocated for one or more workloads to be processed by a plurality of processor cores.
42. The method of claim 41, wherein the memory class of service parameters comprise a plurality of sets of parameters, each set for a selected memory class of service including a priority, a minimum delay value, and maximum delay value, and an identifier of the selected memory class of service.
43. The method of claim 41 or 42, wherein generating the plurality of memory bandwidth settings comprises determining a total delay budget and setting each of the plurality of memory bandwidth settings to a delay value based at least in part on the total delay budget and the priority of the selected memory class of service.
44. An apparatus comprising:
   a proportional-integral-derivative (PID) controller to set performance monitoring configuration parameters based at least in part on memory class of service parameters and to continuously calculate an error value as a difference between a set point and a process variable of performance monitoring statistics; and
   a memory bandwidth balancer to generate memory bandwidth settings, based at least in part on the error value, for use by a memory bandwidth allocator to adjust priorities of memory bandwidth allocated for one or more workloads to be processed by a plurality of processor cores.
45. The apparatus of claim 44, wherein the memory class of service parameters comprise a plurality of sets of parameters, each set for a selected memory class of service including a priority, a minimum delay value, and maximum delay value, and an identifier of the selected memory class of service.
46. The apparatus of claim 45, wherein one of the plurality of memory bandwidth settings comprises a delay value based at least in part on a total delay budget and the priority of the selected memory class of service.

In embodiments, computer executable instructions to implement logic flows described above for workload monitor 202 and/or delay balancer 218 may be stored on a storage medium, non-transitory computer readable medium or machine readable medium, such as an optical, magnetic or semiconductor storage, or other such article of manufacture. Examples of a computer readable or machine-readable storage medium may include any tangible media capable of storing electronic data, including volatile memory or non-volatile memory, removable or non-removable memory, erasable or non-erasable memory, writeable or re-writeable memory, and so forth. Examples of computer executable instructions may include any suitable type of code, such as source code, compiled code, interpreted code, executable code, static code, dynamic code, object-oriented code, visual code, and the like. The examples are not limited in this context.

According to some examples, a processing component may execute processing operations or logic for instructions stored on a storage medium. The processing component may include various hardware elements, software elements, or a combination of both. Examples of hardware elements may include devices, logic devices, components, processors, microprocessors, circuits, processor circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), memory units, logic gates, registers, semiconductor device, chips, microchips, chip sets, and so forth. Examples of software elements may include software components, programs, applications, computer programs, application programs, device drivers, system programs, software development programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given example.

In some examples, other platform components may include common computing elements, such as one or more processors, multi-core processors, co-processors, memory units, chipsets, controllers, peripherals, interfaces, oscillators, timing devices, video cards, audio cards, multimedia input/output (I/O) components (e.g., digital displays), power supplies, and so forth. Examples of memory units may include without limitation various types of computer readable and machine readable storage media in the form of one or more higher speed memory units, such as read-only memory (ROM), random-access memory (RAM), dynamic RAM (DRAM), Double-Data-Rate DRAM (DDRAM), synchronous DRAM (SDRAM), static RAM (SRAM), programmable ROM (PROM), erasable programmable ROM (EPROM), electrically erasable programmable ROM (EEPROM), types of non-volatile memory such as 3-D cross-point memory that may be byte or block addressable. Non-volatile types of memory may also include other types of byte or block addressable non-volatile memory such as, but not limited to, multi-threshold level NAND flash memory, NOR flash memory, single or multi-level PCM, resistive memory, nanowire memory, FeTRAM, MRAM that incorporates memristor technology, STT-MRAM, or a combination of any of the above. Other types of computer readable and machine-readable storage media may also include magnetic or optical cards, an array of devices such as Redundant Array of Independent Disks (RAID) drives, solid state memory devices (e.g., USB memory), solid state drives (SSD) and any other type of storage media suitable for storing information.

In some examples, the processing unit described above may be connected to a communications interface that may include logic and/or features to support a communication interface. For these examples, a communications interface may include one or more communication interfaces that operate according to various communication protocols or standards to communicate over direct or network communication links or channels. Direct communications may occur via use of communication protocols or standards described in one or more industry standards (including progenies and variants) such as those associated with the peripheral component interconnect express (PCIe) specification. Network communications may occur via use of communication protocols or standards such those described in one or more Ethernet standards promulgated by the Institute of Electrical and Electronics Engineers (IEEE). For example, one such Ethernet standard may include IEEE 802.3. Network communication may also occur according to one or more OpenFlow specifications such as the OpenFlow Switch Specification.

The components and features of a computing platform according to embodiments, including logic represented by the instructions stored on a storage medium, may be implemented using any combination of discrete circuitry, ASICs, logic gates and/or single chip architectures. Further, the features of the computing platform may be implemented using microcontrollers, programmable logic arrays and/or microprocessors or any combination of the foregoing where suitably appropriate. It is noted that hardware, firmware, and/or software elements may be collectively or individually referred to herein as "logic" or "circuit."

It should be appreciated that the figures and descriptions may represent functionally descriptive examples of many potential implementations. Accordingly, division, omission or inclusion of block functions depicted in the accompanying figures does not infer that the hardware components, circuits, software, and/or elements for implementing these functions would necessarily be divided, omitted, or included in embodiments.

### Example Computer Architectures

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

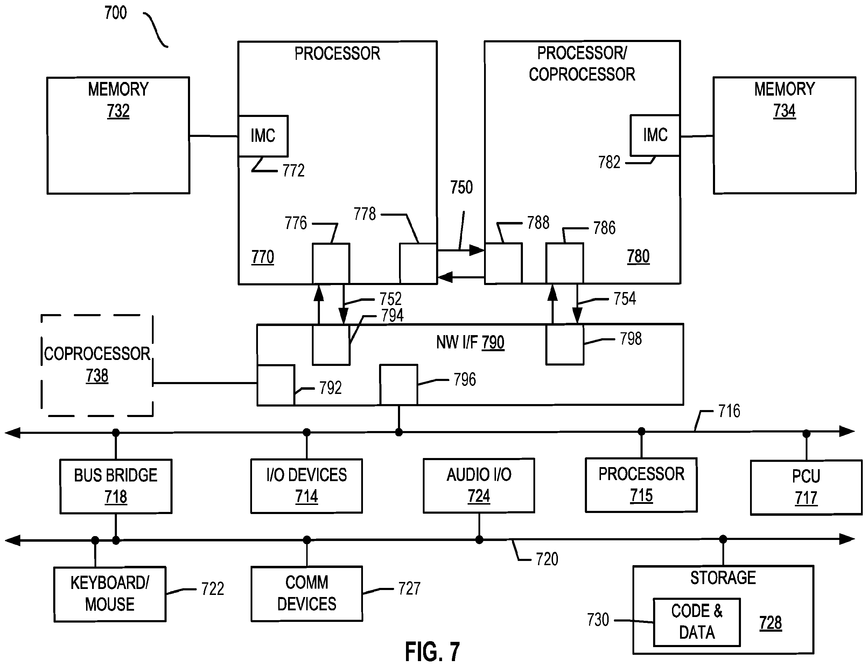

FIG. 7 illustrates an example computing system. Multiprocessor system 700 is an interfaced system and includes a plurality of processors or cores including a first processor 770 and a second processor 780 coupled via an interface 750 such as a point-to-point (P-P) interconnect, a fabric, and/or bus. In some examples, the first processor 770 and the second processor 780 are homogeneous. In some examples, the first processor 770 and the second processor 780 are heterogenous. Though the example system 700 is shown to have two processors, the system may have three or more processors, or may be a single processor system. In some examples, the computing system is a system on a chip (SoC).

Processors 770 and 780 are shown including integrated memory controller (IMC) circuitry 772 and 782, respectively. Processor 770 also includes interface circuits 776 and 778; similarly, second processor 780 includes interface circuits 786 and 788. Processors 770, 780 may exchange information via the interface 750 using interface circuits 778, 788. IMCs 772 and 782 couple the processors 770, 780 to respective memories, namely a memory 732 and a memory 734, which may be portions of main memory locally attached to the respective processors.

Processors 770, 780 may each exchange information with a network interface (NW I/F) 790 via individual interfaces 752, 754 using interface circuits 776, 794, 786, 798. The network interface 790 (e.g., one or more of an interconnect, bus, and/or fabric, and in some examples is a chipset) may optionally exchange information with a coprocessor 738 via an interface circuit 792. In some examples, the coprocessor 738 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 770, 780 or outside of both processors, yet connected with the processors via an interface such as P-P interconnect, such that either or both processors' local cache information may be stored in the shared cache if a processor is placed into a low power mode.

Network interface 790 may be coupled to a first interface 716 via interface circuit 796. In some examples, first interface 716 may be an interface such as a Peripheral Component Interconnect (PCI) interconnect, a PCI Express interconnect or another I/O interconnect. In some examples, first interface 716 is coupled to a power control unit (PCU) 717, which may include circuitry, software, and/or firmware to perform power management operations with regard to the processors 770, 780 and/or co-processor 738. PCU 717 provides control information to a voltage regulator (not shown) to cause the voltage regulator to generate the appropriate regulated voltage. PCU 717 also provides control information to control the operating voltage generated. In various examples, PCU 717 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 717 is illustrated as being present as logic separate from the processor 770 and/or processor 780. In other cases, PCU 717 may execute on a given one or more of cores (not shown) of processor 770 or 780. In some cases, PCU 717 may be implemented as a microcontroller (dedicated or general-purpose) or other control logic configured to execute its own dedicated power management code, sometimes referred to as P-code. In yet other examples, power management operations to be performed by PCU 717 may be implemented externally to a processor, such as by way of a separate power management integrated circuit (PMIC) or another component external to the processor. In yet other examples, power management operations to be performed by PCU 717 may be implemented within BIOS or other system software.

Various I/O devices 714 may be coupled to first interface 716, along with a bus bridge 718 which couples first interface 716 to a second interface 720. In some examples, one or more additional processor(s) 715, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 716. In some examples, second interface 720 may be a low pin count (LPC) interface. Various devices may be coupled to second interface 720 including, for example, a keyboard and/or mouse 722, communication devices 727 and storage circuitry 728. Storage circuitry 728 may be one or more non-transitory machine-readable storage media as described below, such as a disk drive or other mass storage device which may include instructions/code and data 730. Further, an audio I/O 724 may be coupled to second interface 720. Note that other architectures than the point-to-point architecture described above are possible. For example, instead of the point-to-point architecture, a system such as multiprocessor system 700 may implement a multi-drop interface or other such architecture.

### Example Core Architectures, Processors, and Computer Architectures

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

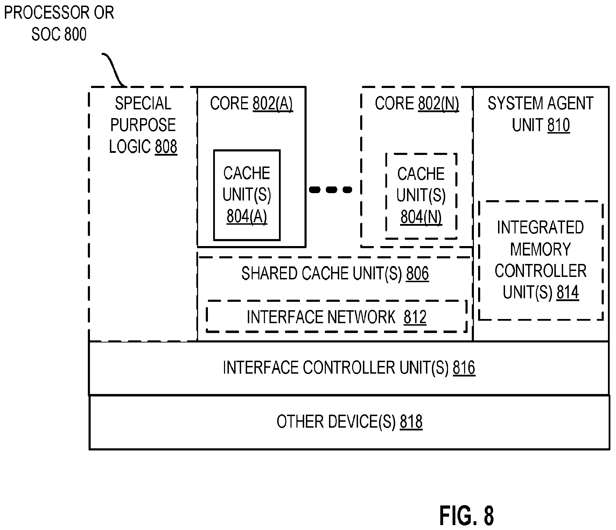

FIG. 8 illustrates a block diagram of an example processor and/or SoC 800 that may have one or more cores and an integrated memory controller. The solid lined boxes illustrate a processor 800 with a single core 802(A), system agent unit circuitry 810, and a set of one or more interface controller unit(s) circuitry 816, while the optional addition of the dashed lined boxes illustrates an alternative processor 800 with multiple cores 802(A)-(N), a set of one or more integrated memory controller unit(s) circuitry 814 in the system agent unit circuitry 810, and special purpose logic 808, as well as a set of one or more interface controller units circuitry 816. Note that the processor 800 may be one of the processors 770 or 780, or co-processor 738 or 715 of FIG. 7.

Thus, different implementations of the processor 800 may include: 1) a CPU with the special purpose logic 808 being integrated graphics and/or scientific (throughput) logic (which may include one or more cores, not shown), and the cores 802(A)-(N) being one or more general purpose cores (e.g., general purpose in-order cores, general purpose out-of-order cores, or a combination of the two); 2) a coprocessor with the cores 802(A)-(N) being a large number of special purpose cores intended primarily for graphics and/or scientific (throughput); and 3) a coprocessor with the cores 802(A)-(N) being a large number of general purpose in-order cores. Thus, the processor 800 may be a general-purpose processor, coprocessor, or special-purpose processor, such as, for example, a network or communication processor, compression engine, graphics processor, GPGPU (general purpose graphics processing unit), a high throughput many integrated cores (MIC) coprocessor (including 30 or more cores), embedded processor, or the like. The processor may be implemented on one or more chips. The processor 800 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 804(A)-(N) within the cores 802(A)-(N), a set of one or more shared cache unit(s) circuitry 806, and external memory (not shown) coupled to the set of integrated memory controller unit(s) circuitry 814. The set of one or more shared cache unit(s) circuitry 806 may include one or more mid-level caches, such as level 2 (L2), level 3 (L3), level 4 (L4), or other levels of cache, such as a last level cache (LLC), and/or combinations thereof. While in some examples interface network circuitry 812 (e.g., a ring interconnect) interfaces the special purpose logic 808 (e.g., integrated graphics logic), the set of shared cache unit(s) circuitry 806, and the system agent unit circuitry 810, alternative examples use any number of well-known techniques for interfacing such units. In some examples, coherency is maintained between one or more of the shared cache unit(s) circuitry 806 and cores 802(A)-(N). In some examples, interface controller unit circuitry 816 couples the cores 802 to one or more other devices 818 such as one or more I/O devices, storage, one or more communication devices (e.g., wireless networking, wired networking, etc.), etc.

In some examples, one or more of the cores 802(A)-(N) are capable of multi-threading. The system agent unit circuitry 810 includes those components coordinating and operating cores 802(A)-(N). The system agent unit circuitry 810 may include, for example, power control unit (PCU) circuitry and/or display unit circuitry (not shown). The PCU may be or may include logic and components needed for regulating the power state of the cores 802(A)-(N) and/or the special purpose logic 808 (e.g., integrated graphics logic). The display unit circuitry is for driving one or more externally connected displays.

The cores 802(A)-(N) may be homogenous in terms of instruction set architecture (ISA). Alternatively, the cores 802(A)-(N) may be heterogeneous in terms of ISA; that is, a subset of the cores 802(A)-(N) may be capable of executing an ISA, while other cores may be capable of executing only a subset of that ISA or another ISA.

### Example Core Architectures - In-order and out-of-order core block diagram

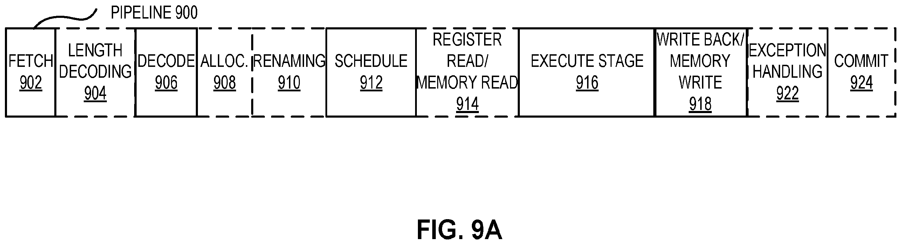

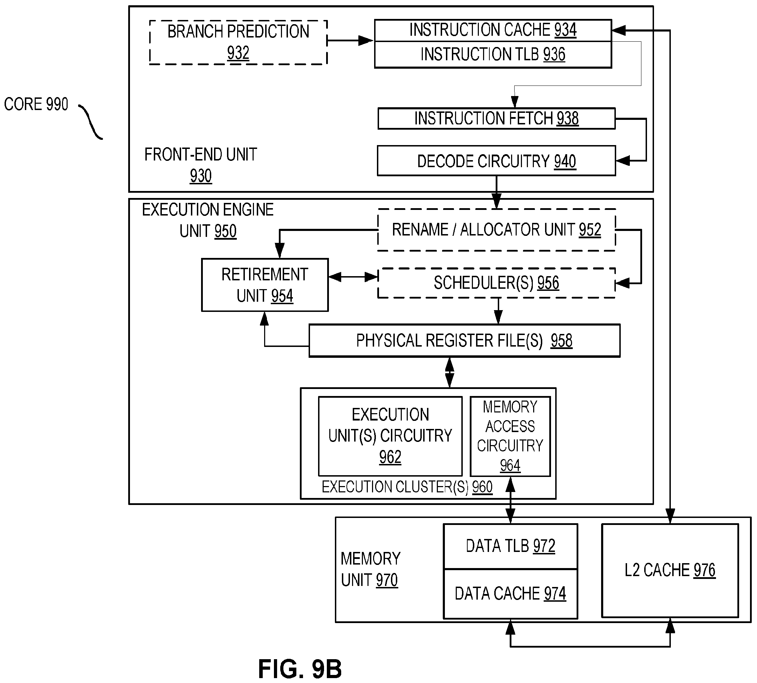

FIG. 9A is a block diagram illustrating both an example in-order pipeline and an example register renaming, out-of-order issue/execution pipeline according to examples. FIG. 9B is a block diagram illustrating both an example in-order architecture core and an example register renaming, out-of-order issue/execution architecture core to be included in a processor according to examples. The solid lined boxes in FIGS. 9A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 9A, a processor pipeline 900 includes a fetch stage 902, an optional length decoding stage 904, a decode stage 906, an optional allocation (Alloc) stage 908, an optional renaming stage 910, a schedule (also known as a dispatch or issue) stage 912, an optional register read/memory read stage 914, an execute stage 916, a write back/memory write stage 918, an optional exception handling stage 922, and an optional commit stage 924. One or more operations can be performed in each of these processor pipeline stages. For example, during the fetch stage 902, one or more instructions are fetched from instruction memory, and during the decode stage 906, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 906 and the register read/memory read stage 914 may be combined into one pipeline stage. In one example, during the execute stage 916, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 9B may implement the pipeline 900 as follows: 1) the instruction fetch circuitry 938 performs the fetch and length decoding stages 902 and 904; 2) the decode circuitry 940 performs the decode stage 906; 3) the rename/allocator unit circuitry 952 performs the allocation stage 908 and renaming stage 910; 4) the scheduler(s) circuitry 956 performs the schedule stage 912; 5) the physical register file(s) circuitry 958 and the memory unit circuitry 970 perform the register read/memory read stage 914; the execution cluster(s) 960 perform the execute stage 916; 6) the memory unit circuitry 970 and the physical register file(s) circuitry 958 perform the write back/memory write stage 918; 7) various circuitry may be involved in the exception handling stage 922; and 8) the retirement unit circuitry 954 and the physical register file(s) circuitry 958 perform the commit stage 924.

FIG. 9B shows a processor core 990 including front-end unit circuitry 930 coupled to execution engine unit circuitry 950, and both are coupled to memory unit circuitry 970. The core 990 may be a reduced instruction set architecture computing (RISC) core, a complex instruction set architecture computing (CISC) core, a very long instruction word (VLIW) core, or a hybrid or alternative core type. As yet another option, the core 990 may be a special-purpose core, such as, for example, a network or communication core, compression engine, coprocessor core, general purpose computing graphics processing unit (GPGPU) core, graphics core, or the like.

The front-end unit circuitry 930 may include branch prediction circuitry 932 coupled to instruction cache circuitry 934, which is coupled to an instruction translation lookaside buffer (TLB) 936, which is coupled to instruction fetch circuitry 938, which is coupled to decode circuitry 940. In one example, the instruction cache circuitry 934 is included in the memory unit circuitry 970 rather than the front-end circuitry 930. The decode circuitry 940 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 940 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 940 may be implemented using various different mechanisms. Examples of suitable mechanisms include, but are not limited to, look-up tables, hardware implementations, programmable logic arrays (PLAs), microcode read only memories (ROMs), etc. In one example, the core 990 includes a microcode ROM (not shown) or other medium that stores microcode for certain macroinstructions (e.g., in decode circuitry 940 or otherwise within the front-end circuitry 930). In one example, the decode circuitry 940 includes a micro-operation (micro-op) or operation cache (not shown) to hold/cache decoded operations, micro-tags, or micro-operations generated during the decode or other stages of the processor pipeline 900. The decode circuitry 940 may be coupled to rename/allocator unit circuitry 952 in the execution engine circuitry 950.

The execution engine circuitry 950 includes the rename/allocator unit circuitry 952 coupled to retirement unit circuitry 954 and a set of one or more scheduler(s) circuitry 956. The scheduler(s) circuitry 956 represents any number of different schedulers, including reservations stations, central instruction window, etc. In some examples, the scheduler(s) circuitry 956 can include arithmetic logic unit (ALU) scheduler/scheduling circuitry, ALU queues, address generation unit (AGU) scheduler/scheduling circuitry, AGU queues, etc. The scheduler(s) circuitry 956 is coupled to the physical register file(s) circuitry 958. Each of the physical register file(s) circuitry 958 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 958 includes vector registers unit circuitry, writemask registers unit circuitry, and scalar register unit circuitry. These register units may provide architectural vector registers, vector mask registers, general-purpose registers, etc. The physical register file(s) circuitry 958 is coupled to the retirement unit circuitry 954 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 954 and the physical register file(s) circuitry 958 are coupled to the execution cluster(s) 960. The execution cluster(s) 960 includes a set of one or more execution unit(s) circuitry 962 and a set of one or more memory access circuitry 964. The execution unit(s) circuitry 962 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 956, physical register file(s) circuitry 958, and execution cluster(s) 960 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 964). It should also be understood that where separate pipelines are used, one or more of these pipelines may be out-of-order issue/execution and the rest in-order.

In some examples, the execution engine unit circuitry 950 may perform load store unit (LSU) address/data pipelining to an Advanced Microcontroller Bus (AMB) interface (not shown), and address phase and writeback, data phase load, store, and branches.

The set of memory access circuitry 964 is coupled to the memory unit circuitry 970, which includes data TLB circuitry 972 coupled to data cache circuitry 974 coupled to level 2 (L2) cache circuitry 976. In one example, the memory access circuitry 964 may include load unit circuitry, store address unit circuitry, and store data unit circuitry, each of which is coupled to the data TLB circuitry 972 in the memory unit circuitry 970. The instruction cache circuitry 934 is further coupled to the level 2 (L2) cache circuitry 976 in the memory unit circuitry 970. In one example, the instruction cache 934 and the data cache 974 are combined into a single instruction and data cache (not shown) in L2 cache circuitry 976, level 3 (L3) cache circuitry (not shown), and/or main memory. The L2 cache circuitry 976 is coupled to one or more other levels of cache and eventually to a main memory.

The core 990 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 990 includes logic to support a packed data instruction set architecture extension (e.g., AVX1, AVX2), thereby allowing the operations used by many multimedia applications to be performed using packed data.

### Example Execution Unit(s) Circuitry

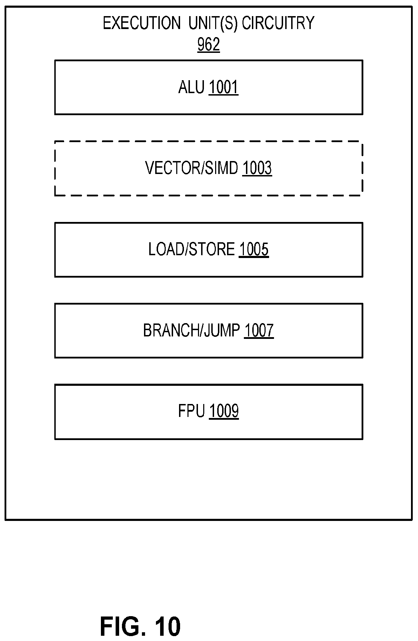

FIG. 10 illustrates examples of execution unit(s) circuitry, such as execution unit(s) circuitry 962 of FIG. 9B. As illustrated, execution unit(s) circuitry 962 may include one or more ALU circuits 1001, optional vector/single instruction multiple data (SIMD) circuits 1003, load/store circuits 1005, branch/jump circuits 1007, and/or Floating-point unit (FPU) circuits 1009. ALU circuits 1001 perform integer arithmetic and/or Boolean operations. Vector/SIMD circuits 1003 perform vector/SIMD operations on packed data (such as SIMD/vector registers). Load/store circuits 1005 execute load and store instructions to load data from memory into registers or store from registers to memory. Load/store circuits 1005 may also generate addresses. Branch/jump circuits 1007 cause a branch or jump to a memory address depending on the instruction. FPU circuits 1009 perform floating-point arithmetic. The width of the execution unit(s) circuitry 962 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors, and/or system features described herein. Such examples may also be referred to as program products.

### Emulation (including binary translation, code morphing, etc.)

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

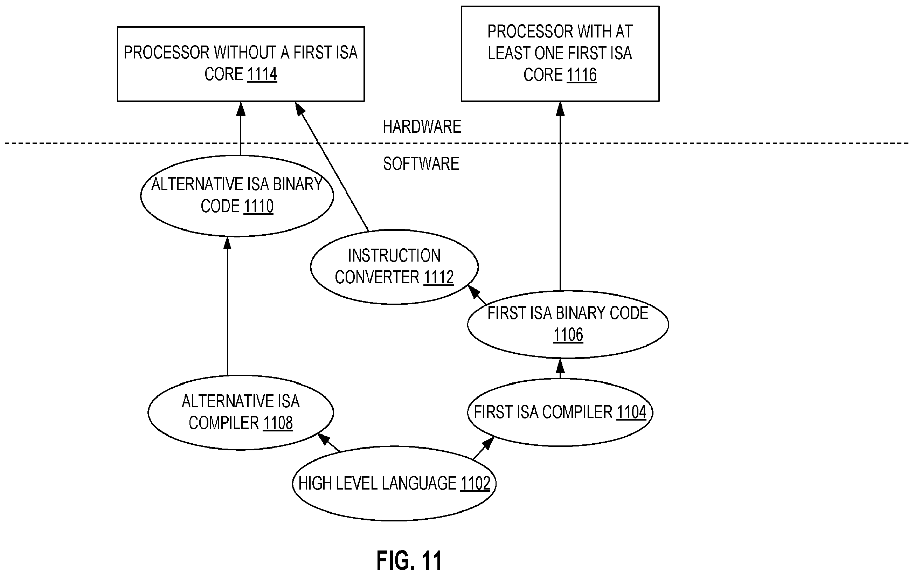

FIG. 11 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 11 shows a program in a high-level language 1102 may be compiled using a first ISA compiler 1104 to generate first ISA binary code 1106 that may be natively executed by a processor with at least one first ISA core 1116. The processor with at least one first ISA core 1116 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 1104 represents a compiler that is operable to generate first ISA binary code 1106 (e.g., object code) that can, with or without additional linkage processing, be executed on the processor with at least one first ISA core 1116. Similarly, FIG. 11 shows the program in the high-level language 1102 may be compiled using an alternative ISA compiler 1108 to generate alternative ISA binary code 1110 that may be natively executed by a processor without a first ISA core 1114. The instruction converter 1112 is used to convert the first ISA binary code 1106 into code that may be natively executed by the processor without a first ISA core 1114. This converted code is not necessarily to be the same as the alternative ISA binary code 1110; however, the converted code will accomplish the general operation and be made up of instructions from the alternative ISA. Thus, the instruction converter 1112 represents software, firmware, hardware, or a combination thereof that, through emulation, simulation, or any other process, allows a processor or other electronic device that does not have a first ISA processor or core to execute the first ISA binary code 1106.

Various examples may be implemented using hardware elements, software elements, or a combination of both. In some examples, hardware elements may include devices, components, processors, microprocessors, circuits, circuit elements (e.g., transistors, resistors, capacitors, inductors, and so forth), integrated circuits, ASIC, programmable logic devices (PLD), digital signal processors (DSP), FPGA, memory units, logic gates, registers, semiconductor device, chips, microchips, chip sets, and so forth. In some examples, software elements may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation.

Some examples may include an article of manufacture or at least one computer-readable medium. A computer-readable medium may include a non-transitory storage medium to store logic. In some examples, the non-transitory storage medium may include one or more types of computer-readable storage media capable of storing electronic data, including volatile memory or non-volatile memory, removable or non-removable memory, erasable or non-erasable memory, writeable or re-writeable memory, and so forth. In some examples, the logic may include various software elements, such as software components, programs, applications, computer programs, application programs, system programs, machine programs, operating system software, middleware, firmware, software modules, routines, subroutines, functions, methods, procedures, software interfaces, API, instruction sets, computing code, computer code, code segments, computer code segments, words, values, symbols, or any combination thereof.

Some examples may be described using the expression "in one example" or "an example" along with their derivatives. These terms mean that a particular feature, structure, or characteristic described in connection with the example is included in at least one example. The appearances of the phrase "in one example" in various places in the specification are not necessarily all referring to the same example.

Included herein are logic flows or schemes representative of example methodologies for performing novel aspects of the disclosed architecture. While, for purposes of simplicity of explanation, the one or more methodologies shown herein are shown and described as a series of acts, those skilled in the art will understand and appreciate that the methodologies are not limited by the order of acts. Some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all acts illustrated in a methodology may be required for a novel implementation.

A logic flow or scheme may be implemented in software, firmware, and/or hardware. In software and firmware embodiments, a logic flow or scheme may be implemented by computer executable instructions stored on at least one non-transitory computer readable medium or machine readable medium, such as an optical, magnetic or semiconductor storage. The embodiments are not limited in this context.

Some examples are described using the expressions "coupled" and "connected" along with their derivatives. These terms are not necessarily intended as synonyms for each other. For example, descriptions using the terms "connected" and/or "coupled" may indicate that two or more elements are in direct physical or electrical contact with each other. The term "coupled," however, may also mean that two or more elements are not in direct contact with each other, but yet still co-operate or interact with each other.

It is emphasized that the Abstract of the Disclosure is provided to comply with 37 C.F.R. Section 1.72(b), requiring an abstract that will allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single example for the purpose of streamlining the disclosure. This method of disclosure is not to be interpreted as reflecting an intention that the claimed examples require more features than are expressly recited in each claim. Rather, as the following claims reflect, inventive subject matter lies in less than all features of a single disclosed example. Thus, the following claims are hereby incorporated into the Detailed Description, with each claim standing on its own as a separate example. In the appended claims, the terms "including" and "in which" are used as the plain-English equivalents of the respective terms "comprising" and "wherein," respectively. Moreover, the terms "first," "second," "third," and so forth, are used merely as labels, and are not intended to impose numerical requirements on their objects.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

References to "one example," "an example," "one embodiment," "an embodiment," etc., indicate that the example or embodiment described may include a particular feature, structure, or characteristic, but every example or embodiment may not necessarily include the particular feature, structure, or characteristic. Moreover, such phrases do not necessarily refer to the same example or embodiment. Further, when a particular feature, structure, or characteristic is described in connection with an example or embodiment, it is submitted that it is within the knowledge of one skilled in the art to affect such feature, structure, or characteristic in connection with other examples or embodiments whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e., A and B, A and C, B and C, and A, B and C). As used in this specification and the claims and unless otherwise specified, the use of the ordinal adjectives "first," "second," "third," etc. to describe an element merely indicates that a particular instance of an element or different instances of like elements are being referred to and is not intended to imply that the elements so described must be in a particular sequence, either temporally, spatially, in ranking, or in any other manner. Also, as used in descriptions of embodiments, a "/" character between terms may mean that what is described may include or be implemented using, with, and/or according to the first term and/or the second term (and/or any other additional terms).

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. An apparatus comprising:
a plurality of clusters of processor cores;
a plurality of memory bandwidth allocators, at least one of the plurality of memory bandwidth allocators per cluster, to apply memory bandwidth settings to one or more processor cores of an associated cluster to dynamically adjust priorities of memory bandwidth allocated for one or more workloads to be processed by the one or more processor cores of the associated cluster;
a plurality of memory controllers, at least one of the plurality of memory controllers per cluster of processor cores;
a plurality of performance monitors, at least one of the plurality of performance monitors per cluster, to generate performance monitoring statistics by monitoring performance of the one or more workloads by one or more processor cores based at least in part on performance monitoring configuration parameters; and
a hardware dynamic resource controller configurable into a plurality of virtual dynamic resource controllers, wherein one virtual dynamic resource controller per cluster is to set the performance monitoring configuration parameters based at least in part on memory class of service parameters, and to set memory bandwidth settings per cluster based at least in part on the performance monitoring statistics.

2. The apparatus of claim 1, wherein each of the plurality of virtual dynamic resource controllers includes a proportional-integral-derivative (PID) controller to continuously calculate an error value as a difference between a set point and a process variable of the performance monitoring statistics.

3. The apparatus of claim 2, wherein each of the plurality of virtual dynamic resource controllers includes a memory bandwidth balancer to generate the memory bandwidth settings based at least in part on the error value.

4. The apparatus of claim any of claims 1-3, wherein one or more of the plurality of memory bandwidth settings comprises a first value for memory bandwidth allocation for a low priority processor core based on an assigned memory class of service of the low priority processor core.

5. The apparatus of claim 4, wherein one or more of the plurality of memory bandwidth settings comprises a second value for memory bandwidth allocation for a high priority processor core based on an assigned memory class of service of the high priority processor core, the first value being less than the second value.

6. The apparatus of any of claims 1-5, wherein a class of service of one of the processor cores corresponds to one of the memory class of service parameters.

7. The apparatus of any of claims 1-6, wherein the performance monitoring configuration parameters comprise the set point, a time window, a plurality of events, and a plurality of enable bits corresponding to the plurality of events.

8. The apparatus of any of claims 1-7, wherein the memory class of service parameters comprise a plurality of sets of parameters, each set for a selected memory class of service including a priority, a minimum delay value, and maximum delay value, and an identifier of the selected memory class of service.

9. An apparatus comprising:
one or more input/output dies;
a plurality of compute dies, each of the plurality of compute dies including a plurality of processor cores;
a plurality of memory bandwidth allocators, at least one of the plurality of memory bandwidth allocators per compute die, to apply memory bandwidth settings to one or more processor cores of an associated compute die to dynamically adjust priorities of memory bandwidth allocated for one or more workloads to be processed by the one or more processor cores of the associated compute die;
a plurality of memory controllers, at least one of the plurality of memory controllers per compute die;
a plurality of performance monitors, at least one of the plurality of performance monitors per compute die, to generate performance monitoring statistics by monitoring performance of the one or more workloads by one or more processor cores of the associated compute die based at least in part on performance monitoring configuration parameters; and
one or more hardware dynamic resource controllers configurable into a plurality of virtual dynamic resource controllers, wherein one virtual dynamic resource controller per compute die is to set the performance monitoring configuration parameters based at least in part on memory class of service parameters, and to set memory bandwidth settings per compute die based at least in part on the performance monitoring statistics.

10. The apparatus of claim 9, wherein one of the one or more input/output dies includes one of the one or more hardware dynamic resource controllers.

11. The apparatus of claim 9, wherein one of the plurality of compute dies includes one of the one or more hardware dynamic resource controllers.

12. The apparatus of any of claims 9-11, wherein each of the plurality of virtual dynamic resource controllers includes:
a proportional-integral-derivative (PID) controller to continuously calculate an error value as a difference between a set point and a process variable of the performance monitoring statistics; and
a memory bandwidth balancer to generate the memory bandwidth settings based at least in part on the error value.

13. A method comprising:
receiving memory class of service parameters;
setting performance monitoring configuration parameters, based at least in part on the memory class of service parameters, for use by a plurality of performance monitors, at least one of the plurality of performance monitors per cluster of a plurality of clusters of processor cores, to generate performance monitoring statistics by monitoring performance of one or more workloads by one or more processor cores of an associated cluster based at least in part on performance monitoring configuration parameters;
receiving the performance monitoring statistics from the performance monitor; and
generating, by at least one of a plurality of virtual dynamic resource controllers hosted by a hardware dynamic resource controller configured into one of the plurality of virtual dynamic resource controllers per cluster, based at least in part on the performance monitoring statistics, a plurality of memory bandwidth settings to be applied by one or more memory bandwidth allocators to one or more processor cores of an associated cluster to dynamically adjust priorities of memory bandwidth allocated for the one or more workloads to be processed by the one or more processor cores of the associated cluster.

14. The method of claim 13, comprising periodically repeating receiving the performance monitoring statistics from the performance monitors and generating the plurality of memory bandwidth settings to be applied by the one or more memory bandwidth allocators to the one or more processor cores of the associated cluster to dynamically adjust priorities of memory bandwidth allocated for the one or more workloads to be processed by the one or more processor cores of the associated cluster.

15. The method of claim 13 or 14, wherein:
the memory class of service parameters comprise a plurality of sets of parameters, each set for a selected memory class of service including a priority, a minimum delay value, and maximum delay value, and an identifier of the selected memory class of service; and
generating the plurality of memory bandwidth settings comprises determining a total delay budget and setting each of the plurality of memory bandwidth settings to a delay value based at least in part on the total delay budget and the priority of the selected memory class of service.
